# EUROPEAN PATENT APPLICATION

(11) **EP 4 764 880 A1**
(43) Date of publication of application: **24.06.2026**
(21) Application number: 24869877.1
(22) Date of filing: 21.06.2024
(51) Int. Cl.: G06F 16/182

(54) **DATA PROCESSING METHOD AND APPARATUS AND SERVER**

(30) Priority: 27.09.2023 CN 202311279760
(71) Applicant: HUAWEI TECHNOLOGIES CO., LTD., Shenzhen 518129 (CN)
(72) Inventor: KANG, Junbin, Shenzhen, Guangdong 518129 (CN); ZHANG, Lu, Shenzhen, Guangdong 518129 (CN)
(74) Representative: Goddar, Heinz J.
(86) International application number: PCT/CN2024/100562
(87) International publication number: WO 2025/066316

(57) **Abstract**

A data processing method and apparatus, and a server are provided, and may be applied to the field of data storage technologies. The method includes: obtaining a first mapped value, where the first mapped value belongs to a first mapping range; splitting the first mapping range into a second mapping range and a third mapping range by using the first mapped value as a first split point; and splitting a first shard into a second shard and a third shard by using a location of metadata of an object corresponding to the first mapped value in the first shard as a second split point, where a mapped value corresponding to an object in the second shard belongs to the second mapping range, and a mapped value corresponding to an object in the third shard belongs to the third mapping range; and associating the second mapping range with the second shard, and associating the third mapping range with the third shard. The method can reduce resource consumption of shard splitting and improve shard splitting efficiency.

## Description

This application claims priority to Chinese Patent Application No. 202311279760.6, filed with the China National Intellectual Property Administration on September 27, 2023 and entitled "DATA PROCESSING METHOD AND APPARATUS, AND SERVER", which is incorporated herein by reference in its entirety.

### TECHNICAL FIELD

This application relates to the field of data storage technologies, and in particular, to a data processing method and apparatus, and a server.

### BACKGROUND

In the field of data storage technologies, in addition to storing data of an object, metadata of the object needs to be stored. The metadata of the object is stored in an index node (inode). Inodes of objects in a same directory are recorded in a same inode distribution table. The inode of the object is an inode storing metadata of the object. The object in the directory is a file or a level-1 subdirectory in the directory.

To improve a concurrent access level of the inode distribution table, the inode distribution table is split into a plurality of shards. As a quantity of inodes recorded in the shard increases, the shard needs to be split, to ensure a concurrent access level of the shard.

Currently, a shard splitting solution consumes a large amount of resources such as a processor resource and a memory resource, and takes a long time.

### SUMMARY

Embodiments of this application provide a data processing method and apparatus, and a server, to reduce resource consumption of shard splitting and improve shard splitting efficiency.

According to a first aspect, a data processing method is provided. The method may be used to manage a first shard. The first shard is associated with a first mapping range, the first shard records metadata of a plurality of objects in a directory, mapped values corresponding to the plurality of objects belong to the first mapping range, and an arrangement sequence of the metadata of the plurality of objects in the first shard is consistent with a size sequence of the mapped values corresponding to the plurality of objects.

The method includes: obtaining a first mapped value, where the first mapped value belongs to the first mapping range; splitting the first mapping range into a second mapping range and a third mapping range by using the first mapped value as a first split point; and splitting the first shard into a second shard and a third shard by using a location of metadata of an object corresponding to the first mapped value in the first shard as a second split point, where a mapped value corresponding to an object in the second shard belongs to the second mapping range, and a mapped value corresponding to an object in the third shard belongs to the third mapping range; and associating the second mapping range with the second shard, and associating the third mapping range with the third shard. The first split point is a split point for splitting the first mapping range into the second mapping range and the third mapping range, and the second split point is a split point for splitting the first shard into the second shard and the third shard.

The method may be used to manage an inode distribution table and a shard map of the directory. The first shard is a shard of the inode distribution table of the directory, and the shard map records association between the first shard and the first mapping range. After the first shard is split into the second shard and the third shard, and the first mapping range is split into the second mapping range and the third mapping range, association between the second shard and the second mapping range and association between the third shard and the third mapping range may be recorded in the shard map.

The mapped value corresponding to the object is a value obtained by calculating an identifier of the object according to a mapping algorithm (for example, a hash range partitioning algorithm or a key range partitioning algorithm).

The shard map records mapping ranges associated with different shards in the inode distribution table. When accessing metadata of an object, a mapping range is obtained based on a mapped value corresponding to the object. A shard associated with the mapping range is a shard that records the metadata of the object, so that the metadata of the object can be accessed in the shard. Due to an association relationship between a mapping range and a shard, to be specific, mapped values of objects in different shards belong to different mapping ranges, this requires that the different mapping ranges cannot overlap.

In the method provided in this embodiment of this application, when a shard is split, a mapping range associated with the shard may be split based on a mapped value used as a mapping range split point, and the shard is split by using a location of metadata of an object corresponding to the mapped value in the shard as a shard split point. Because an arrangement sequence of metadata of objects in the shard is consistent with a size sequence of mapped values corresponding to the objects, it can be ensured that mapping ranges obtained through splitting do not overlap, and different shards obtained through splitting respectively belong to different mapping ranges. Then, the shards obtained through splitting are respectively associated with the corresponding mapping ranges. In this way, splitting of the shard can be completed while ensuring that the mapping ranges obtained through splitting do not overlap and the different shards obtained through splitting belong to the different mapping ranges.

In the method, metadata or a snapshot of metadata does not need to be copied, and incremental write back does not need to be performed. Therefore, the method consumes a minimal processor resource, memory resource, and the like. In addition, splitting is fast and takes an extremely short time, so that a concurrent access level of the metadata can be quickly improved, and a problem like an access hotspot can be eliminated. Further, splitting consumes a minimal resource and takes an extremely short time, which can ensure that the shard is always small, and facilitate migration of the shard between different storage nodes, quickly achieving load balancing and scaling between the storage nodes.

In a possible implementation, an index structure of the first shard includes a plurality of leaf nodes, the leaf node records metadata of one or more of the plurality of objects, an arrangement sequence of the plurality of leaf nodes is consistent with a size sequence of mapped values corresponding to objects in the plurality of leaf nodes, and in the leaf node, an arrangement sequence of metadata of objects is consistent with a size sequence of mapped values corresponding to the objects; and splitting the first shard into the second shard and the third shard by using the location of the metadata of the object corresponding to the first mapped value in the first shard as the second split point includes: splitting a first leaf node into a second leaf node and a third leaf node by using a location of the metadata of the object corresponding to the first mapped value in the first leaf node as a third split point, where the second leaf node and a fourth leaf node in the plurality of leaf nodes are used as leaf nodes in an index structure of the second shard, and the third leaf node and a fifth leaf node in the plurality of leaf nodes are used as leaf nodes in an index structure of the third shard; and a mapped value corresponding to an object in the fourth leaf node is less than the first mapped value, and a mapped value corresponding to an object in the fifth leaf node is greater than the first mapped value. The third split point is also referred to as a leaf node split point, and is a split point for splitting the leaf node.

In this implementation, the arrangement sequence of the leaf nodes in the index structure of the shard is consistent with the size sequence of the mapped values corresponding to the objects in the leaf nodes, and in the leaf node, the arrangement sequence of the metadata of the objects is consistent with the size sequence of the mapped values corresponding to the objects. In this way, when the shard is split based on the first mapped value, the leaf node is split into two leaf nodes by using the location of the metadata of the object corresponding to the first mapped value in the leaf node as the split point. A leaf node on one side of the metadata of the object corresponding to the first mapped value may be used as a leaf node in an index structure of one shard obtained through splitting, and a leaf node on the other side may be used as a leaf node in an index structure of the other shard obtained through splitting. In this way, splitting of the leaf node in the index structure of the shard can be completed.

In a possible implementation, the index structure of the first shard includes a first intermediate node, and a key range recorded by the first intermediate node includes a key of an object in the first leaf node; and splitting the first shard into the second shard and the third shard by using the location of the metadata of the object corresponding to the first mapped value in the first shard as the second split point includes: splitting the first intermediate node into a second intermediate node and a third intermediate node based on a key of the object corresponding to the first mapped value and the key range recorded by the first intermediate node, where a key range recorded by the second intermediate node includes a key of an object in the second leaf node, and a key range recorded by the third intermediate node includes a key of an object in the third leaf node.

In this implementation, when the shard is split based on the first mapped value, an intermediate node that records the key range to which the first leaf node belongs is split, based on the key corresponding to the first mapped value and a key range to which the first leaf node belongs, into an intermediate node that records a key range to which the second leaf node belongs and an intermediate node that records a key range to which the third leaf node belongs. In this way, splitting of the intermediate node is completed.

In a possible implementation, the index structure of the second shard includes a pointer pointing from the second leaf node to the third leaf node, and the method further includes: obtaining an access request, where the access request includes a second mapped value, and the second mapped value is a mapped value corresponding to the object in the first leaf node; and querying, from the second leaf node and the third leaf node based on the pointer, for metadata of an object corresponding to the second mapped value.

The metadata of the object corresponding to the second mapped value may be first queried for in the second leaf node. If the metadata of the object corresponding to the second mapped value is not found in the second leaf node, the metadata of the object corresponding to the second mapped value is queried for in the third leaf node based on the pointer.

In this implementation, there is a pointer between the second leaf node and the third leaf node that are obtained through splitting. In this way, when an access request for the first leaf node is received during splitting of the first shard, if metadata of an object to be accessed by using the access request cannot be found in the second leaf node, the metadata of the object to be accessed by using the access request may be queried for in the third leaf node based on the pointer. In other words, splitting of the shard does not affect execution of the access request. In this way, when the shard is split, incremental write back does not need to be performed on the shard, and the shard does not need to be locked. In short, splitting of the shard does not affect a service or has a small impact on a service.

In a possible implementation, a fourth shard is associated with a fourth mapping range, the fourth shard records metadata of at least one object in the directory, a mapped value of the at least one object belongs to the fourth mapping range, the fourth mapping range is adjacent to the first mapping range, and the method further includes: combining the fourth mapping range and the first mapping range into a fifth mapping range, and combining the first shard and the fourth shard into a fifth shard; and associating the fifth mapping range with the fifth shard.

Before the first shard and the fourth shard are combined into the fifth shard, the shard map also records association between the fourth mapping range and the fourth shard. After the first shard and the second shard are combined into the fifth shard, the shard map records association between the fifth mapping range and the fifth shard. In this way, a shard (that is, the fifth shard) in which metadata of objects in the original first shard and the original fourth shard is located can be found based on the shard map and the fifth mapping range.

In this implementation, the mapping ranges associated with the to-be-combined shards are adjacent, the to-be-combined shards may be directly combined, the mapping ranges associated with the to-be-combined shards may be combined, and the shard map records association between the combined shard and the combined mapping range. In this way, combination of the shards can be completed.

In this implementation, the metadata or the snapshot of the metadata does not need to be copied, and incremental write back does not need to be performed. Therefore, consumption of the processor resource, the memory resource, and the like is extremely low. In addition, a combination speed is fast, and consumed time is extremely short, so that combination of the shards can be quickly completed. Furthermore, metadata can be normally written during combination, and metadata write interruption is not caused.

In a possible implementation, a first root node in the index structure of the first shard corresponds to the first mapping range, and a second root node in an index structure of the fourth shard corresponds to the fourth mapping range; and combining the first shard and the fourth shard into the fifth shard includes: when a height of the index structure of the first shard is consistent with a height of the index structure of the fourth shard, combining the first root node and the second root node to obtain a root node in an index structure of the fifth shard; and corresponding the fifth mapping range to the root node in the index structure of the fifth shard; or when a height of the index structure of the first shard is greater than a height of the index structure of the fourth shard, corresponding the fifth mapping range to the first root node to obtain a root node in an index structure of the fifth shard; and creating a pointer pointing from the root node in the index structure of the fifth shard to the second root node.

In this implementation, if heights of index structures of to-be-combined shards are the same, root nodes in the index structures may be directly combined to obtain a root node in an index structure of a combined shard. If heights of index structures of to-be-combined shards are different, a mapping range corresponding to a root node of a low index structure may be corresponded to a root node of a high index structure, and a pointer pointing from the root node of the high index structure to the root node of the low index structure is constructed, so that the root node of the low index structure is referred to as an intermediate node of a combined index structure.

In a possible implementation, a size of a key of the object is positively correlated with a size of a mapped value corresponding to the object, and the key of the object is used to query for metadata of the object in the first shard.

In this way, when the metadata of the object is stored in the shard based on the key of the object, it can be ensured that an arrangement sequence of metadata of objects in the shard is consistent with a size sequence of mapped values corresponding to the objects.

According to a second aspect, a data processing apparatus is provided. A first shard is associated with a first mapping range, the first shard records metadata of a plurality of objects in a directory, mapped values corresponding to the plurality of objects belong to the first mapping range, and an arrangement sequence of the metadata of the plurality of objects in the first shard is consistent with a size sequence of the mapped values corresponding to the plurality of objects. The apparatus includes: an obtaining module, configured to obtain a first mapped value, where the first mapped value belongs to the first mapping range; a splitting module, configured to: split the first mapping range into a second mapping range and a third mapping range by using the first mapped value as a first split point; and split the first shard into a second shard and a third shard by using a location of metadata of an object corresponding to the first mapped value in the first shard as a second split point, where a mapped value corresponding to an object in the second shard belongs to the second mapping range, and a mapped value corresponding to an object in the third shard belongs to the third mapping range; and an association module, configured to: in a shard map, record association between the second mapping range and the second shard, and record association between the third mapping range and the third shard.

In a possible implementation, an index structure of the first shard includes a plurality of leaf nodes, the leaf node records metadata of one or more of the plurality of objects, an arrangement sequence of the plurality of leaf nodes is consistent with a size sequence of mapped values corresponding to objects in the plurality of leaf nodes, and in the leaf node, an arrangement sequence of metadata of objects is consistent with a size sequence of mapped values corresponding to the objects; and the splitting module is configured to: split a first leaf node into a second leaf node and a third leaf node by using a location of the metadata of the object corresponding to the first mapped value in the first leaf node as a third split point, where the second leaf node and a fourth leaf node in the plurality of leaf nodes are used as leaf nodes in an index structure of the second shard, and the third leaf node and a fifth leaf node in the plurality of leaf nodes are used as leaf nodes in an index structure of the third shard; and a mapped value corresponding to an object in the fourth leaf node is less than the first mapped value, and a mapped value corresponding to an object in the fifth leaf node is greater than the first mapped value.

In a possible implementation, the index structure of the first shard includes a first intermediate node, and a key range recorded by the first intermediate node includes a key of an object in the first leaf node; and the splitting module is configured to split the first intermediate node into a second intermediate node and a third intermediate node based on a key of the object corresponding to the first mapped value and the key range recorded by the first intermediate node, where a key range recorded by the second intermediate node includes a key of an object in the second leaf node, and a key range recorded by the third intermediate node includes a key of an object in the third leaf node.

In a possible implementation, the index structure of the second shard includes a pointer pointing from the second leaf node to the third leaf node, and the apparatus further includes a query module; the obtaining module is further configured to obtain an access request, where the access request includes a second mapped value, and the second mapped value is a mapped value corresponding to the object in the first leaf node; and the query module is configured to query, from the second leaf node and the third leaf node based on the pointer, for metadata of an object corresponding to the second mapped value.

In a possible implementation, a fourth shard is associated with a fourth mapping range, the fourth shard records metadata of at least one object in the directory, a mapped value of the at least one object belongs to the fourth mapping range, the fourth mapping range is adjacent to the first mapping range, and the apparatus further includes a combination module; the combination module is configured to: combine the fourth mapping range and the first mapping range into a fifth mapping range; and combine the first shard and the fourth shard into a fifth shard; and the association module is further configured to associate the fifth mapping range with the fifth shard.

In a possible implementation, a first root node in the index structure of the first shard corresponds to the first mapping range, and a second root node in an index structure of the fourth shard corresponds to the fourth mapping range; and the combination module is configured to: when a height of the index structure of the first shard is consistent with a height of the index structure of the fourth shard, combine the first root node and the second root node to obtain a root node in an index structure of the fifth shard; and correspond the fifth mapping range to the root node in the index structure of the fifth shard; or when a height of the index structure of the first shard is greater than a height of the index structure of the fourth shard, correspond the fifth mapping range to the first root node to obtain a root node in an index structure of the fifth shard; and create a pointer pointing from the root node in the index structure of the fifth shard to the second root node.

In a possible implementation, a size of a key of the object is positively correlated with a size of a mapped value corresponding to the object, and the key of the object is used to query for metadata of the object in the first shard.

According to a third aspect, a storage node is provided, including a processor and a memory. The memory is configured to store a computer program, and the processor is configured to execute the computer program to implement the method provided in the first aspect.

According to a fourth aspect, a computer-readable storage medium is provided. The computer-readable storage medium stores a computer program, and when the computer program is executed by a processor, the method provided in the first aspect is implemented.

According to a fifth aspect, a computer program product is provided, including instructions used to implement the method provided in the first aspect.

According to a sixth aspect, a server is provided, including a processor and a memory. The memory is configured to store a computer program, and the processor is configured to execute the computer program to implement the method provided in the first aspect.

According to a seventh aspect, a data processing method is provided, and the method may be used to manage a first shard. The first shard is associated with a first mapping range, the first shard records metadata of a plurality of objects in a directory, mapped values corresponding to the plurality of objects belong to the first mapping range, and an arrangement sequence of the metadata of the plurality of objects in the first shard is consistent with a size sequence of the mapped values corresponding to the plurality of objects. The method includes: splitting the first mapping range into a second mapping range and a third mapping range by using a first mapped value as a first split point; and splitting the first shard into a second shard and a third shard by using a location of metadata of an object corresponding to the first mapped value in the first shard as a second split point. The first mapped value belongs to the first mapping range, a mapped value corresponding to an object in the second shard belongs to the second mapping range, a mapped value corresponding to an object in the third shard belongs to the third mapping range, the second mapping range is used to associate with the second shard, and the third mapping range is used to associate with the third shard.

According to an eighth aspect, a data processing apparatus is provided, and the apparatus may be configured to manage a first shard. The first shard is associated with a first mapping range, the first shard records metadata of a plurality of objects in a directory, mapped values corresponding to the plurality of objects belong to the first mapping range, and an arrangement sequence of the metadata of the plurality of objects in the first shard is consistent with a size sequence of the mapped values corresponding to the plurality of objects. The apparatus includes: a splitting module, configured to: split the first mapping range into a second mapping range and a third mapping range by using a first mapped value as a first split point; and split the first shard into a second shard and a third shard by using a location of metadata of an object corresponding to the first mapped value in the first shard as a second split point. The first mapped value belongs to the first mapping range, a mapped value corresponding to an object in the second shard belongs to the second mapping range, a mapped value corresponding to an object in the third shard belongs to the third mapping range, the second mapping range is used to associate with the second shard, and the third mapping range is used to associate with the third shard.

For beneficial effect of the second aspect to the eighth aspect, refer to the foregoing descriptions of the beneficial effect of the first aspect. Details are not described herein again.

### BRIEF DESCRIPTION OF DRAWINGS

FIG. 1A is a diagram of a structure of a key according to an embodiment of this application;
FIG. 1B is a diagram of a structure of a storage system according to an embodiment of this application;
FIG. 2 is a diagram of a structure of a storage node according to an embodiment of this application;
FIG. 3 is a diagram of an inode distribution table access solution according to an embodiment of this application;
FIG. 4 is a diagram of an inode distribution table access solution according to an embodiment of this application;
FIG. 5 is a flowchart of a data processing method according to an embodiment of this application;
FIG. 6 is a diagram of an index structure of a shard according to an embodiment of this application;
FIG. 7 is a diagram of a leaf node splitting solution according to an embodiment of this application;
FIG. 8 is a diagram of an intermediate node splitting solution according to an embodiment of this application;
FIG. 9 is a diagram of a root node splitting solution according to an embodiment of this application;
FIG. 10A is a diagram of an index structure of a shard according to an embodiment of this application;
FIG. 10B is a diagram of an index structure of a shard according to an embodiment of this application;
FIG. 11 is a diagram of a shard according to an embodiment of this application;
FIG. 12A to FIG. 12C are a diagram of splitting an index structure of a shard according to an embodiment of this application;
FIG. 13 is a flowchart of a data processing method according to an embodiment of this application;
FIG. 14 is a diagram of combining index structures of shards according to an embodiment of this application;
FIG. 15 is a diagram of a structure of a data processing apparatus according to an embodiment of this application;
FIG. 16A is a diagram of a structure of a storage node according to an embodiment of this application; and
FIG. 16B is a diagram of a structure of a compute device cluster according to an embodiment of this application.

### DESCRIPTION OF EMBODIMENTS

The following describes solutions provided in embodiments of this application with reference to accompanying drawings. In embodiments of this application, "a plurality of" means two or more, and "a plurality of types" means two or more types. The terms "first", "second", and the like are merely intended to distinguish between similar objects, and do not need to be used to describe a specific sequence or a quantity of objects.

To facilitate understanding of the solutions provided in embodiments of this application, technical terms that may be used in embodiments of this application are first described.

An object is a general term for a file and a directory. An object in the directory is a file or a level-1 subdirectory stored in the directory.

Metadata of the object is data used to describe content, an attribute, and the like of the object, for example, a name of the object, a size of the object, modification and access time of the object, and permission of the object. The metadata of the object is used for classification, organization, tagging, sorting, searching, and the like of the object.

An inode is a data structure for recording metadata of an object in a distributed file system. An inode that records metadata of an object may be referred to as an inode of the object.

An inode distribution table is a data table for recording an inode of the object in the directory. The inode distribution table is a horizontal table, to be specific, one row records an inode of one object.

A tuple (tuple) is also referred to as a data row, and is a row in the inode distribution table. One tuple represents one row in the inode record table, that is, metadata of one object.

A shard is also referred to as an index shard, and is a table shard that includes a plurality of tuples in the inode distribution table. In other words, the shard is obtained by dividing the inode distribution table, and the inode distribution table includes a plurality of shards.

A mapped value (mapped value) is a mapped value that corresponds to an object and that is obtained by mapping an identifier of the object (for example, a name of the object) according to a preset mapping algorithm (for example, a hash range partitioning algorithm or a key range partitioning algorithm). The mapped value corresponding to the object may also be referred to as a mapped value of the object for short. The mapped value has a size that may be represented by a positive integer.

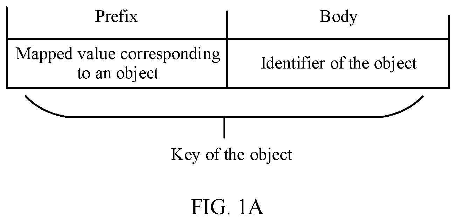

A key (key) is an index key. An index structure maintains a mapping relationship from a key to a value (value) to support quick search of the value by using the key. In embodiments of this application, a size of a key of the object is positively correlated with a size of the mapped value corresponding to the object. The key of the object may include the mapped value corresponding to the object and the identifier of the object. For example, as shown in FIG. 1A, the key of the object may be a 2-column key (2-column key) including the mapped value corresponding to the object and the identifier of the object. The mapped value of the object may be referred to as a prefix (prefix) of the key of the object, and the identifier of the object may be referred to as a body of the key of the object. The size of the key is positively correlated with the mapped value included in the key. In other words, when mapped values included in keys are different, sizes of the keys are determined by the mapped values. When mapped values of keys are the same, sizes of the keys are determined by sizes of identifiers of objects. The sizes of the identifiers of the objects may be represented by a size sequence of lexicographical orders corresponding to the identifiers.

A key range is a range including keys of objects in a same data set (for example, a same shard or a same leaf node in the index structure).

A mapping range is a set including a plurality of consecutive mapped values. The mapping range may be represented as a closed interval, and the mapped values constituting the mapping range are endpoints at two ends of the interval and integers between the two ends. An upper endpoint of the mapping range is a maximum mapped value in the mapping range. The inode distribution table and the shard each are associated with a mapping range. A mapping range corresponding to the inode distribution table includes all allocatable mapped values of the inode distribution table. A total quantity of allocatable mapped values, and a minimum mapped value and a maximum mapped value in the allocatable mapped values may be preset. A mapping range corresponding to the shard is a sub-range in the mapping range associated with the inode distribution table, and mapping ranges associated with different shards do not intersect.

A mapping algorithm is an algorithm for mapping the key of the object to a mapped value. Common mapping algorithms include the hash range partitioning algorithm, the key range partitioning algorithm, and the like.

A consistent hashing (consistent hashing) algorithm is a hash algorithm for calculating the mapped value of the object, and is a hash range partitioning algorithm. In embodiments of this application, the consistent hashing algorithm is an algorithm of performing hash calculation on the identifier (for example, the name) of the object based on the total quantity of allocatable mapped values, where an obtained hash value is used as the mapped value of the object. A common consistent hashing algorithm is taking a remainder based on the total quantity of allocatable mapped values. For example, the name of the object is hashed, and an obtained hash value is divided by the total quantity of allocatable mapped values. An obtained remainder is used as the mapped value of the object.

Shard map (shard map): One inode distribution table corresponds to one shard map, and the shard map is used to calculate or query for a shard in which metadata of an object in the inode distribution table is located. The shard map records an association relationship between a mapping range and a shard. Specifically, the shard map records a mapping relationship between the mapping range and information of the shard (for example, a storage address and an identity (identity, ID) of the shard). More specifically, the shard map records a start mapped value and an end mapped value of the mapping range, and an ID of a shard associated with the mapped value and a storage location of the shard (that is, an identifier of a node on which the shard is located) associated with the shard. The shard may be named by using a shard ID as a suffix, to support positioning of the index shard. The shard map is stored and managed on a disk on a per-shard basis. After being loaded to a memory, the shard map is organized into an ordered array, to support fast binary search.

A directory table is a data table that records metadata (that is, metadata of the directory) used for path resolution.

The metadata of the directory includes information such as a directory ID, a parent directory ID, a directory name, permission, and a node group ID of the directory. The directory table may be replicated to all storage nodes to support low-overhead path resolution. Detailed information (for example, a size and modification time) about each directory in the directory table is maintained in the inode distribution table of a parent directory of the directory. The directory table maintains only information for resolving a directory path.

A split point is a split location at which the shard or the mapping range is split, in other words, at the split point, the shard or the mapping range is split.

The parent directory of the directory is a directory in which the directory is located, in other words, the directory is a level-1 subdirectory of the parent directory of the directory.

A node group includes one or more storage nodes. A storage node in a node group of the directory is a storage node storing the inode distribution table of the directory, that is, a storage node on which the shards constituting the inode distribution table are located.

The distributed file system (distributed file system, DFS) is a file system in which a physical storage resource managed by the file system (file system, FS) is not necessarily directly connected to a local storage node, but is connected to the storage node via a computer network, or is a complete hierarchical file system formed by combining several different logical disk partitions or volume labels.

A tree index structure is a tree-shaped index structure. Generally, there are a plurality of layers, and each layer includes at least one page node. One page node represents one storage page (page). In the tree index structure, a page node at the bottom layer is referred to as a leaf node, a page node at a layer above the leaf node may be referred to as an intermediate node, and a page node at the top layer is referred to as a root node. When the tree index structure has only two layers, the root node is also referred to as the intermediate node. Each intermediate node is associated with one or more page nodes at a next layer. The intermediate node is a parent page node of the page node that is associated with the intermediate node and that is at the next layer.

A B-link tree (B-link tree) is a tree index structure and is a variant of a B+ tree (B+ tree). Each page node in the B-link tree stores a pointer pointing to a right sibling node of the page node. A minimum key recorded in the right sibling node of the page node is adjacent to a maximum key recorded in the page node. In this way, after a page node is filled, for example, a page with a storage space of 8K is filled, a new right sibling node may be obtained by splitting (split) the page node, metadata of objects corresponding to half of keys recorded in the page node is recorded in the right sibling node, and a pointer pointing to the right sibling node is set. Then, a maximum key of the page node and the pointer pointing to the right sibling node are inserted into a parent page node of the page node. If the parent page node is also full in this process, internal splitting occurs iteratively. The B-link tree can be split without locking the entire tree, and correctness of another ongoing concurrent operation can also be ensured. For example, if a key to be searched is located on the right sibling page node obtained through splitting, because the pointer pointing to the right sibling page node has not been inserted into the parent page node, the key is still routed to the page node on which splitting occurs. In this case, if it is found that the key to be searched is greater than the maximum key of the page node, the key is jumped to the right sibling page node via a right pointer of the page node.

A pointer pointing to a page node is an identifier of the page node. As described above, one page node is one storage page, and the pointer is an identifier of the storage page. The identifier of the storage page may alternatively be an address of the storage page.

A key in the page node is a key of an object to which metadata recorded in the page node belongs.

A multi-version concurrency control (multi-version concurrency control, MVCC) mechanism is a mechanism for usually implementing isolation in transaction ACID by using an MVCC technology in the relational database field. ACID indicates atomicity (atomicity), consistency (consistency), isolation (isolation), and durability (durability).

A write ahead log (write ahead log, WAL) is a mechanism in which a modification is not written directly to a database file, but to a database log. If a transaction fails, a record in the database log is ignored and the modification is canceled; or if a transaction succeeds, a record in the database log is written back to the database file at later time, and the modification is committed. A database uses the write ahead log mechanism to ensure durability and troubleshooting.

The foregoing describes some technical terms that may be used in embodiments of this application, but not all technical terms. For technical terms that are not described in the specification and that are used in embodiments of this application, refer to the descriptions of the conventional technology.

As described above, the metadata of the object is used for classification, organization, tagging, sorting, searching, and the like of the object. Therefore, access to the inode distribution table is frequent and diversified. Some accesses may be conflicting, and it is difficult to perform these accesses on a same shard of the inode distribution table at the same time. As a result, a concurrent access level of the inode distribution table is low. For example, a modification operation on the shard needs to lock the shard. Therefore, when the modification operation is performed on the shard, it is difficult to perform another operation on the shard.

As services are performed, metadata of more and more objects are recorded in a same shard. As a result, access to the shard is more frequent, and more conflicting accesses occur. Therefore, metadata that is of more objects and that is recorded in the shard indicates a lower concurrent access level of the shard.

To improve the concurrent access level of the shard, the shard may be split into two shards. Compared with the shard on which splitting is not performed, the shard obtained through splitting records metadata of fewer objects. This can ensure a high concurrent access level.

In addition, if a shard deployed on a storage node records metadata of a large quantity of objects, the storage node needs to process a large quantity of access requests, resulting in an access hotspot problem. Therefore, the shard on the storage node needs to be split, and a part of shards obtained through splitting need to be migrated to another storage node, to eliminate the access hotspot.

As described above, if the mapping ranges associated with the shards do not intersect, mapping ranges associated with the shards obtained through splitting also do not intersect. It may be assumed that a mapping range of a source shard (that is, the shard on which splitting is not performed) is a mapping range A1, and mapping ranges of a shard B1 and a shard B2 that are obtained through splitting are respectively a mapping range A11 and a mapping range A12, where the mapping range A11 and the mapping range 12 do not intersect. During splitting, metadata of an object corresponding to a mapped value in the mapping range A11 needs to be recorded in the shard B1 from the source shard, and metadata of an object corresponding to a mapped value in the mapping range A12 needs to be recorded in the shard B2.

In addition, to reduce a storage resource and the like, when shards are small, the shards need to be combined. That the shard is small means that the shard records metadata of fewer objects.

In a solution, during splitting, the shard B1 is created; and then, a snapshot of the metadata of the object corresponding to the mapped value in the mapping range A11 in the source shard is copied to the shard B1. After coping of the snapshot is complete, incremental write back needs to be performed. Specifically, during copying of the snapshot, metadata of a new object may be written into the source shard. If a mapped value of the new object belongs to the mapping range A11, the metadata of the new object needs to be continuously copied to the shard B1. In this way, the foregoing process is iteratively performed until during copying of the snapshot, little metadata is written into the source shard, or a quantity of iterations reaches a preset quantity, the source shard is locked, and final incremental write back is performed. After the final incremental write back is completed and splitting of the shard map is completed, the source shard is unlocked, and splitting is completed. The metadata of the object corresponding to the mapped value in the mapping range A11 may be deleted from the source shard, to obtain the shard B2. In this solution, copying of the snapshot and incremental write back need to be performed, which consumes a large quantity of processor resources and memory resources. In addition, source shard locking in this solution may cause long-time metadata write interruption.

A manner of combining the shards in this solution is similar to a manner of splitting the shard. Specifically, a to-be-combined shard is used as the source shard, a snapshot of source data in the source shard is copied to another to-be-combined shard, and incremental write back and the like are performed after the snapshot is completed. Therefore, the manner of combining the shards in this solution also needs to consume a large quantity of processor resources and memory resources, and may cause metadata write interruption.

An embodiment of this application provides a data processing method. In the method, metadata of an object in a directory is recorded in a shard of an inode distribution table of the directory based on a size of a mapped value corresponding to the object, so that an arrangement sequence of metadata of objects in the shard is consistent with a size sequence of mapped values corresponding to the objects. When the shard is split, a mapping range associated with the shard may be split into two mapping ranges by using the mapped value as a split point S1, and the shard is split into two shards by using a location of the metadata of the object corresponding to the mapped value in the shard as a split point S2. Then, a shard map records an association relationship between the mapping range obtained through splitting and the shard obtained through splitting. In this way, splitting of the shard can be completed.

The split point S1 is also referred to as a mapping range split point, and is a split point for splitting the mapping range. The split point S1 may be specifically the mapped value. The split point S2 is also referred to as a shard split point, and is a split point for splitting the shard. The split point S2 may be specifically the location of the metadata of the object in the shard.

In this solution, metadata or a snapshot of metadata does not need to be copied, and incremental write back does not need to be performed. Therefore, consumption of a processor resource, a memory resource, and the like is extremely low. The metadata or the snapshot of the metadata does not need to be copied, and incremental write back does not need to be performed. Therefore, splitting is fast and takes an extremely short time, so that a concurrent access level of the metadata can be quickly improved, and a problem like an access hotspot can be eliminated. In addition, splitting consumes a minimal resource, and takes an extremely short time, which can ensure that the shard is always small (in other words, records metadata of fewer objects), and facilitate migration of the shard between different storage nodes, quickly achieving load balancing and scaling between the storage nodes.

The following describes the data processing method provided in embodiments of this application.

The data processing method provided in embodiments of this application may be applied to a storage system 100. In some embodiments, the storage system 100 may be a distributed file system, for example, a Hadoop distributed file system (hadoop distributed file system, HDFS) or a Ceph file system (ceph file system, cephFS). In some embodiments, the storage system 100 may be a distributed cache file system (distribute cache file system), for example, Alluxio. In some embodiments, the storage system 100 may be a standalone system, in other words, the storage system 100 is a single device, for example, a single physical device or virtual device.

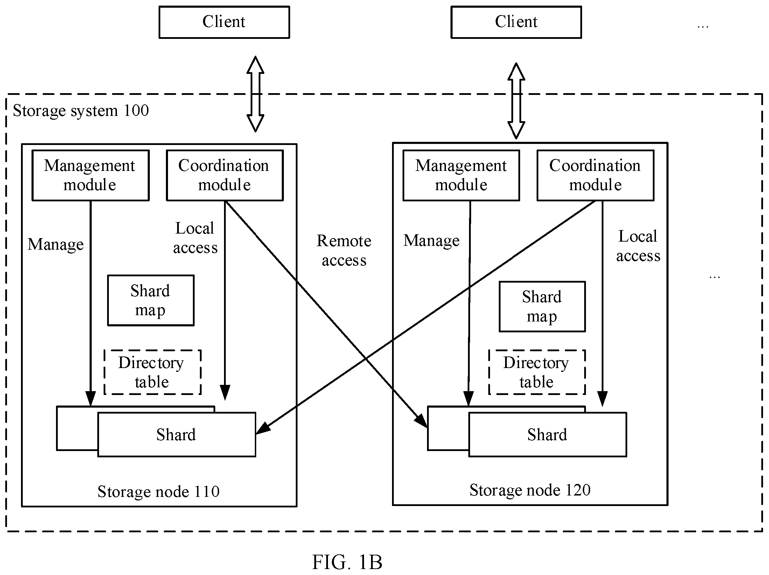

FIG. 1B shows a possible implementation form of the storage system 100. The storage system 100 may include a plurality of storage nodes, for example, a storage node 110 and a storage node 120. The storage node in the storage system 100 may be any apparatus or device that has a data computation function, a storage function, and a communication function, for example, a server, a virtual machine (virtual machine, VM), or a container (container).

The storage node may serve as a data node (data node) role, and is configured to manage and store metadata of an object. As shown in FIG. 1B, the storage node may store one or more shards and a shard map. The shard and the shard map that are stored by the storage node correspond to a same directory.

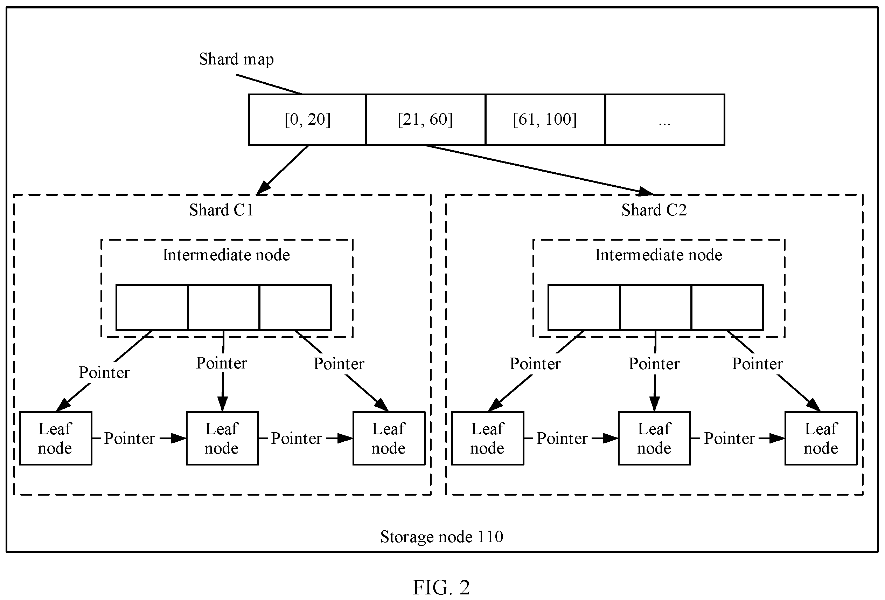

In some embodiments, refer to FIG. 2. It may be assumed that the storage node 110 stores a shard C1 and a shard C2. Index structures of the shard C1 and the shard C2 may be B-link trees, that is, a page node in the index structure has a pointer pointing to a right sibling node. In this way, when the shard is split, no incremental write back and shard locking are required. Details are described below, and are not described herein.

The storage node includes a management module. The management module is configured to manage the shard and the shard map, for example, split the shard, and update the shard map after splitting the shard. In some embodiments, the management module may ensure transaction ACID in a single node by using MVCC and a WAL. A function of the management module is described in detail below with reference to a method embodiment, and details are not described herein.

The storage node may further include a coordination module. With the coordination module, the storage node may serve as a coordinator node (coordinator node) role, and is configured to: receive an access request sent by a client, and access the shard based on the shard map in response to the access request, to access metadata of a specific object or some specific objects in the shard. Specifically, before accessing data of an object, the client needs to access metadata of the object, for example, write or query for the metadata of the object. Before creating an object, metadata of the object needs to be written into an inode distribution table corresponding to a directory in which the object is located (in other words, the metadata of the object is written into a corresponding shard of the inode distribution table). Before opening the object, the metadata of the object needs to be queried for in the inode distribution table corresponding to the directory in which the object is located.

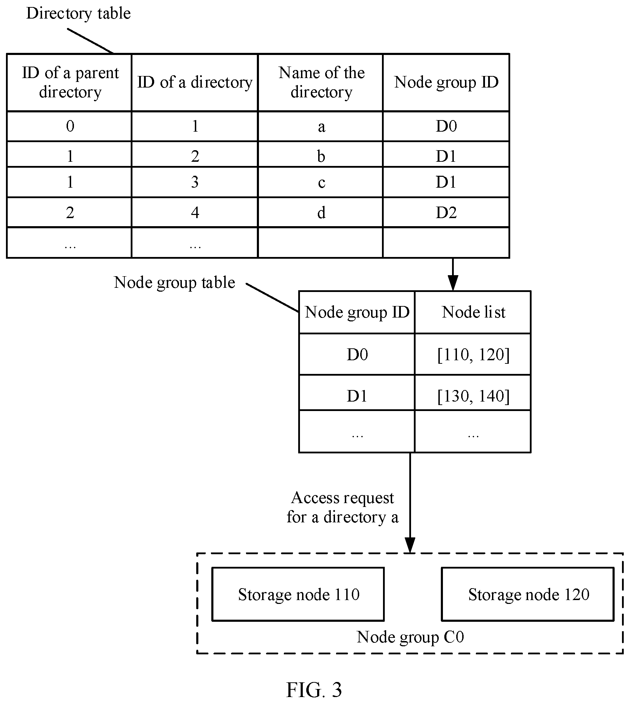

In some embodiments, as shown in FIG. 1B, the storage node stores a directory table, and the directory table records a node group ID of the directory. The shard of the directory is a shard constituting the inode distribution table of the directory. As shown in FIG. 3, a directory table records a correspondence between an ID of a directory, a name of the directory, a parent directory, and a node group ID. For example, an ID of a directory a is 1, an ID of a parent directory is 0, and a node group ID is D0; an ID of a directory b is 2, an ID of a parent directory is 1, and a node group ID is D1; an ID of a directory c is 3, an ID of a parent directory is 1, and a node group ID is D1; and an ID of a directory d is 4, an ID of a parent directory is 2, and a node group ID is D2. In this way, the storage node may obtain the node group ID of the directory based on a parent directory of the directory.

The directory table is associated with a node composition table. The node composition table records storage nodes constituting a node group. As shown in FIG. 3, a node group whose ID is D0 includes the storage node 110 and the storage node 120, and a node group whose ID is D1 includes a storage node 130 and a storage node 140. As described above, a storage node in a node group of the directory is a storage node of the inode distribution table of the directory. In this way, the storage node of the inode distribution table of the directory is obtained based on the node group ID of the directory. The storage node of the inode distribution table of the directory is a storage node storing the inode distribution table of the directory, that is, a storage node storing shards constituting the inode distribution table.

Generally, an access request for a directory includes a storage path of the directory. The storage path of the directory includes an ID of the directory and an ID of a parent directory. In this way, a node group ID of the directory is obtained based on the ID of the directory and the ID of the parent directory in the storage path. Then, a storage node of a shard of an inode distribution table of the directory is obtained based on the node group ID of the directory and a node group table. Further, the access request may be forwarded to the storage node of the inode distribution table of the directory. The storage node of the inode distribution table of the directory may access a corresponding shard in response to the access request.

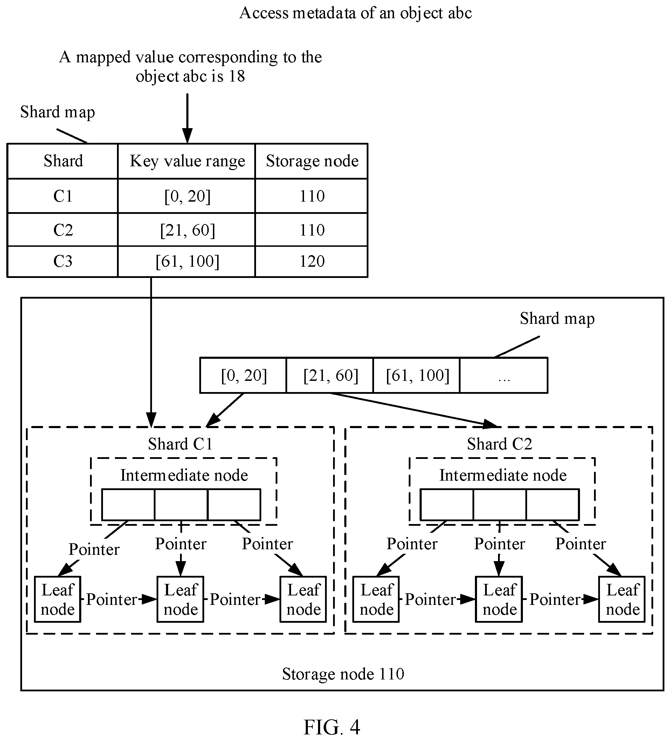

In some embodiments, refer to FIG. 4. It may be assumed that the client sends an access request for accessing an object abc (that is, an object named "abc"). A storage node that receives the access request may obtain, based on a directory table and a node group table, storage nodes of an inode distribution table of a directory a, that is, the storage node 110 and the storage node 120. The storage node that receives the access request may send the access request to the storage node 110 or the storage node 120.

It may be assumed that the access request is sent to the storage node 110. A coordination module in the storage node 110 may query for metadata of the object abc in the inode distribution table of the directory a in response to the access request. Details are as follows:

First, the storage node 110 queries, in a shard of the inode distribution table of the directory a based on a mapped value corresponding to the object abc, for a shard in which the metadata of the object abc is located.

The storage node 110 may calculate the mapped value of the object abc. The access request includes an identifier of the object abc, for example, the name "abc" of the object. The storage node 110 may input the identifier of the object abc into a preset mapping algorithm, so that the mapped value corresponding to the object abc is output according to the mapping algorithm. In an example, the identifier of the object may be input into the mapping algorithm, to obtain the mapped value corresponding to the object. For example, the mapping algorithm may be a consistent hashing algorithm.

The storage node 110 may identify, based on a shard map of the directory a and the mapped value corresponding to the object abc, the shard in which the metadata of the object abc is located. Specifically, a mapping range, in the shard map, to which the mapped value corresponding to the object abc belongs is identified, and a shard associated with the mapping range is obtained based on the identified mapping range. The shard is the shard in which the metadata of the object abc is located. For example, it may be assumed that the mapped value corresponding to the object abc is equal to 18, and mapping ranges recorded in the shard map of the directory a are [0, 20], [21, 60], [61, 100], and the like. The mapping range [0, 20] is associated with a shard C1, the mapping range [21, 60] is associated with a shard C2, and the mapping range [61, 100] is associated with a shard C3. In this way, it can be identified that the mapping range to which the mapped value of the object abc belongs is [0, 20]. Further, it is identified that the shard in which the metadata of the object abc is located is the shard C1.

Second, the storage node 110 queries for the metadata of the object abc in the shard C1 based on a key of the object abc.

If the shard C1 is located on the storage node 110, a coordination module of the storage node 110 queries for the metadata of the object abc in the shard C1 in a local access manner. If the shard C1 is located on a storage node other than the storage node 110, a coordination module of the storage node 110 queries for the metadata of the object abc in the shard C1 in a remote access manner.

The coordination module may search, in the shard C1 by using the key of the object abc, for a tuple in which the metadata of the object abc is located (that is, a data row recording the metadata of the object). Then, the metadata of the object abc is obtained from the tuple obtained through querying, to find the metadata of the object abc.

In other words, the coordination module may obtain the access request, where the access request includes the identifier of the object. The coordination module obtains, based on the identifier of the object, the mapped value corresponding to the object. The coordination module obtains, based on the mapped value and the shard map, the shard in which the metadata of the object is located. Then, the metadata of the object in the shard is queried for based on the key that is constituted by the mapped value corresponding to the object and the identifier of the object.

The coordination module may further record the metadata of the object in the inode distribution table. When detecting that an object is created in the storage system 100, the coordination module may record metadata of the object in an inode distribution table of a directory in which the object is located. Specifically, the coordination module may obtain the identifier of the object, and obtain, based on the identifier of the object, the mapped value corresponding to the object. For example, the identifier of the object is input into the consistent hashing algorithm, so that the mapped value corresponding to the object is output according to the consistent hashing algorithm. Then, the coordination module identifies, based on the shard map, the mapping range to which the mapped value belongs, and obtains the shard associated with the mapping range. The coordination module records the metadata of the object in the shard associated with the mapping range.

The metadata of the object may be recorded in the shard based on a size of the mapped value corresponding to the object, so that an arrangement sequence of metadata of objects in the shard is consistent with a size sequence of mapped values corresponding to the objects. Specifically, each time when metadata of an object is recorded in a shard, the metadata of the to-be-recorded object may be recorded in the shard based on a size sequence of a mapped value corresponding to the to-be-recorded object and a mapped value corresponding to an object that has been recorded in the shard. The object recorded in the shard is an object corresponding to metadata recorded in the shard. In other words, if the metadata of the object is recorded in the shard, the object is an object recorded in the shard.

The metadata of the object may be recorded in the shard based on a size of a key of the object. As described above, the key of the object includes the mapped value corresponding to the object and the identifier of the object. In addition, when the mapped value of the object is greater than a mapped value of another object, the key of the object is greater than a key of the another object. Therefore, the metadata of the object is recorded in the shard based on the size of the key of the object, so that the metadata of the object can be recorded in the shard based on the size of the mapped value corresponding to the object.

In this way, the object may be recorded in the shard, and it is ensured that the arrangement sequence of the metadata of the objects in the shard is consistent with the size sequence of the mapped values corresponding to the objects. The arrangement sequence of the metadata of the objects is an arrangement sequence of locations in which the metadata of the objects is located, that is, an arrangement sequence of tuples in which the metadata of the objects is located.

The foregoing describes the storage system 100 provided in embodiments of this application and the related functions of the storage node. The following describes the data processing method provided in embodiments of this application with reference to the foregoing described content.

The storage node in the storage system 100 may perform the method. The storage node splits, according to the method, the shard stored in the storage node. With reference to accompanying drawings, the following uses an example in which the storage node 110 splits the shard stored in the storage node 110, to describe the method.

The storage node 110 stores a shard 200. The shard 200 may be any shard stored by the storage node 110. For ease of description, it may be assumed that the shard 200 is a shard of the inode shard table of the directory a.

The shard map of the directory a records association between the shard 200 and a mapping range 300. In other words, the shard 200 is used to store metadata of an object corresponding to a mapped value in the mapping range 300. It may be assumed that the shard 200 records metadata of a plurality of objects. Mapped values corresponding to the plurality of objects belong to the mapping range 300. The mapped value corresponding to the object may also be referred to as a mapped value of the object, and is a mapped value output according to the mapping algorithm after the identifier of the object is input into the mapping algorithm (for example, the consistent hashing algorithm). The mapped value corresponding to the object may be used to query for the metadata of the object in the shard 200. For details, refer to the foregoing descriptions of the function of the coordination module. Details are not described herein again.

An arrangement sequence of the metadata of the plurality of objects in the shard 200 is consistent with a size sequence of the mapped values corresponding to the plurality of objects. In other words, a relative location relationship of the metadata of the plurality of objects in the shard 200 is consistent with the size sequence of the mapped values corresponding to the plurality of objects.

Each time when metadata of an object is recorded in the shard 200, the metadata of the to-be-recorded object may be recorded in the shard 200 based on a size sequence of a mapped value corresponding to the to-be-recorded object and a mapped value of an object that has been recorded in the shard 200. In this way, it can be ensured that the arrangement sequence of the metadata of the plurality of objects in the shard 200 is consistent with the size sequence of the mapped values corresponding to the plurality of objects. For details, refer to the foregoing descriptions of the function of the coordination module. Details are not described herein again.

The arrangement sequence of the metadata of the plurality of objects in the shard 200 is consistent with the size sequence of the mapped values corresponding to the plurality of objects. Therefore, any mapped value in the mapping range 300 may be used as a split point S1 to split the shard 200. In this way, shard splitting is implemented without copying the metadata or a snapshot of the metadata, and consumption of a processor resource, a memory resource, and the like is extremely low.

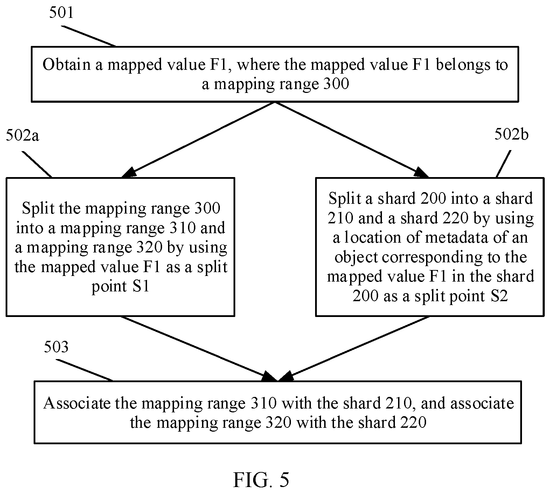

Refer to FIG. 5. A splitting procedure for the shard 200 may include the following steps. These steps may be performed by a management module in the storage node 110.

Step 501: Obtain a mapped value F1, where the mapped value F1 belongs to the mapping range 300.

When the shard 200 needs to be split, for example, when a quantity of objects recorded in the shard 200 reaches a preset value, or when an access hotspot occurs on the storage node 110, step 501 may be performed. The object recorded in the shard 200 is an object to which metadata recorded in the shard 200 belongs, in other words, the shard 200 records metadata of an object, and the object is the object recorded in the shard 200.

The mapped value F1 may also be referred to as a split-mapped value (split-mapped value), and is a mapped value indicating the split point S1 of the shard 200. In other words, the mapped value F1 is used as the split point S1. The mapped value F1 belongs to a mapping range 200, in other words, the mapped value F1 is an element in a mapped value set, namely, the mapping range 300. The mapped value F1 may be any mapped value in the mapping range 300. In some embodiments, a size of the mapped value F1 is a midpoint of the mapping range 300. In other words, mapped values in the mapping range 300 are sorted in a size sequence of the mapped values, and in an obtained sorting result, the mapped value F1 is in a middle location. In some embodiments, the mapped value F1 may be selected from the mapping range 300 according to a uniform partitioning algorithm.

Step 502a: Split the mapping range 300 into a mapping range 310 and a mapping range 320 by using the mapped value F1 as the split point S1.

The mapped values in the mapping range 300 are sorted in the size sequence, to be specific, an arrangement sequence of the mapped values that constitute the mapping range 300 is consistent with the size sequence of the mapped values. The mapping range 300 is split by using the mapped value F1 as the split point S1. Mapped values on one side of the mapped value F1 and the mapped value F1 constitute the mapping range 310, and mapped values on the other side of the mapped value F1 constitute the mapping range 320. Alternatively, mapped values on one side of the mapped value F1 constitute the mapping range 310, and mapped values on the other side of the mapped value F1 and the mapped value F1 constitute the mapping range 320. In this way, the mapping range 300 may be split into the mapping range 310 and the mapping range 320. The mapped values on the one side of the mapped value F1 are mapped values less than the mapped value F1, and the mapped values on the other side of the mapped value F1 are mapped values greater than the mapped value F1. Alternatively, the mapped values on the one side of the mapped value F1 are mapped values greater than the mapped value F1, and the mapped values on the other side of the mapped value F1 are mapped values less than the mapped value F1.

A mapping range associated with the shard 200, that is, the mapping range 300, is recorded in the shard map of the directory a. Splitting the mapping range 300 in step 502a specifically means splitting the mapping range 300 recorded in the shard map of the directory a, to be specific, splitting the mapping range 300 recorded in the shard map of the directory a into the mapping range 310 and the mapping range 320.

Step 502b: Split the shard 200 into a shard 210 and a shard 220 by using a location of metadata of an object corresponding to the mapped value F1 in the shard 200 as a split point S2. A mapped value corresponding to an object in the shard 210 belongs to the mapping range 310, and a mapped value corresponding to an object in the shard 220 belongs to the mapping range 320.

As described above, a sorting sequence of the metadata of the objects in the shard 200 is consistent with the size sequence of the mapped values corresponding to these objects. The shard 200 is split by using the location of the metadata of the object corresponding to the mapped value F1 in the shard 200 as the split point S2. Regions of metadata of objects on one side of the split point S2 and the metadata of the object corresponding to the mapped value F1 in the shard 200 constitute the shard 210, and a region of metadata of objects on the other side of the split point S2 in the shard 200 constitutes the shard 220. Alternatively, a region of metadata of objects on one side of the split point S2 in the shard 200 constitutes the shard 210, and regions of metadata of objects on the other side of the split point S2 and the metadata of the object corresponding to the mapped value F1 in the shard 200 constitute the shard 220.

The shard 200 includes a plurality of tuples, and each tuple records metadata of one object. An arrangement sequence of the tuples is consistent with a size sequence of mapped values of the objects to which the metadata recorded in the tuples belongs. The shard 200 is split by using a tuple in which the metadata of the object corresponding to the mapped value F1 is located as the split point S2. Tuples on one side of the split point S2 and the tuple in which the metadata of the object corresponding to the mapped value F1 is located constitute the shard 210, and tuples on the other side of the split point S2 constitute the shard 220. Alternatively, tuples on one side of the split point S2 constitute the shard 210, and tuples on the other side of the split point S2 and the tuple in which the metadata of the object corresponding to the mapped value F1 is located constitute the shard 220.

In some embodiments, the shard 200 may be organized according to a tree index structure. In other words, an index structure of the shard 200 may be a tree structure. The index structure of the shard 200 may be a B tree (B tree), a B+ tree, a B-link tree, or the like.

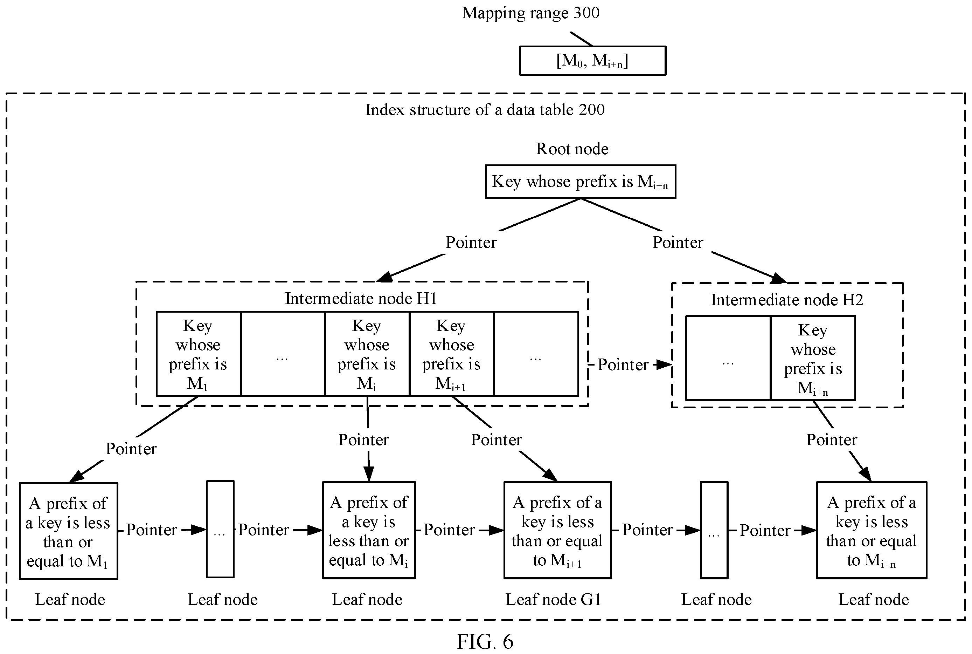

Refer to FIG. 6. The index structure of the shard 200 includes a plurality of leaf nodes. Each leaf node records metadata of one or more objects in the shard 200. An arrangement sequence of the plurality of leaf nodes is consistent with a size sequence of mapped values corresponding to objects in the plurality of leaf nodes. In addition, in the leaf node, an arrangement sequence of metadata of objects is consistent with a size sequence of mapped values corresponding to the objects. The object in the leaf node is an object to which the metadata recorded by the leaf node belongs. In other words, if metadata of an object is recorded in a leaf node, the object is an object in the leaf node.

In a leaf node of the tree index structure, metadata of an object one-to-one corresponds to a key of the object. In the index structure of the shard 200, the arrangement sequence of the leaf nodes is consistent with a size sequence of keys of the objects in the leaf nodes. In addition, in the leaf node, locations of the metadata of the objects are consistent with a size sequence of keys of the objects. As described above, a prefix of the key of the object is a mapped value of the object, and a size of the key is positively correlated with a size of the mapped value of the object. Therefore, the arrangement sequence of the leaf nodes is consistent with the size sequence of the keys of the objects in the leaf nodes. This ensures that the arrangement sequence of the leaf nodes is consistent with a size sequence of the mapped values corresponding to the objects in the leaf nodes. The locations of the metadata of the objects are consistent with the size sequence of the keys of the objects. This ensures that the locations of the metadata of the objects are consistent with the size sequence of the keys of the objects.

In an example, as shown in FIG. 6, it may be assumed that the mapping range 300 is [M₀, Mᵢ₊ₙ], where M₁, ..., Mᵢ, Mᵢ₊₁, ..., and Mᵢ₊ₙ are all mapped values in the mapping range. In addition, Mᵢ₊ₙ>Mᵢ₊₁>Mᵢ>M₁. In a left-to-right arrangement sequence, a leaf node in which metadata of an object whose key prefix is less than or equal to M₁ is located is located on a left side of a leaf node in which metadata of an object whose key prefix is less than or equal to Mᵢ is located, the leaf node in which the metadata of the object whose key prefix is less than or equal to Mᵢ is located is located on a left side of a leaf node in which metadata of an object whose key prefix is less than or equal to Mᵢ₊₁ is located, and the leaf node in which the metadata of the object whose key prefix is less than or equal to Mᵢ₊₁ is located is located on a left side of a leaf node in which metadata of an object whose key prefix is less than or equal to Mᵢ₊ₙ is located. In this way, it is ensured that the arrangement sequence of the leaf nodes is consistent with the size sequence of the mapped values corresponding to the objects in the leaf nodes.

In step 502b, a leaf node G1 is split into a leaf node G2 and a leaf node G3 by using a location of the metadata of the object corresponding to the mapped value F1 in the leaf node G1 as a split point S3. The split point S3 is also referred to as a leaf node split point, and is a split point for splitting the leaf node. The leaf node G1 is a leaf node in which the metadata of the object corresponding to the mapped value F1 is located. As shown in FIG. 6, the leaf nodes are arranged from left to right in ascending order of the keys of the objects in the leaf nodes. In this case, the leaf node G2 may be referred to as a left leaf node obtained through splitting, and the leaf node G3 may be referred to as a right leaf node obtained through splitting.

A storage region of metadata of an object corresponding to a mapped value less than the mapped value F1 and a storage region of the metadata of the object corresponding to the mapped value F1 in the leaf node G1 constitute the leaf node G2, and a storage region of metadata of an object corresponding to a mapped value greater than the mapped value F1 constitutes the leaf node G3. The leaf node G2 and a leaf node on a left side of the leaf node G2 are used as leaf nodes in an index structure of the shard 210, and the leaf node G3 and a leaf node on a right side of the leaf node G3 are used as leaf nodes in an index structure of the shard 220.

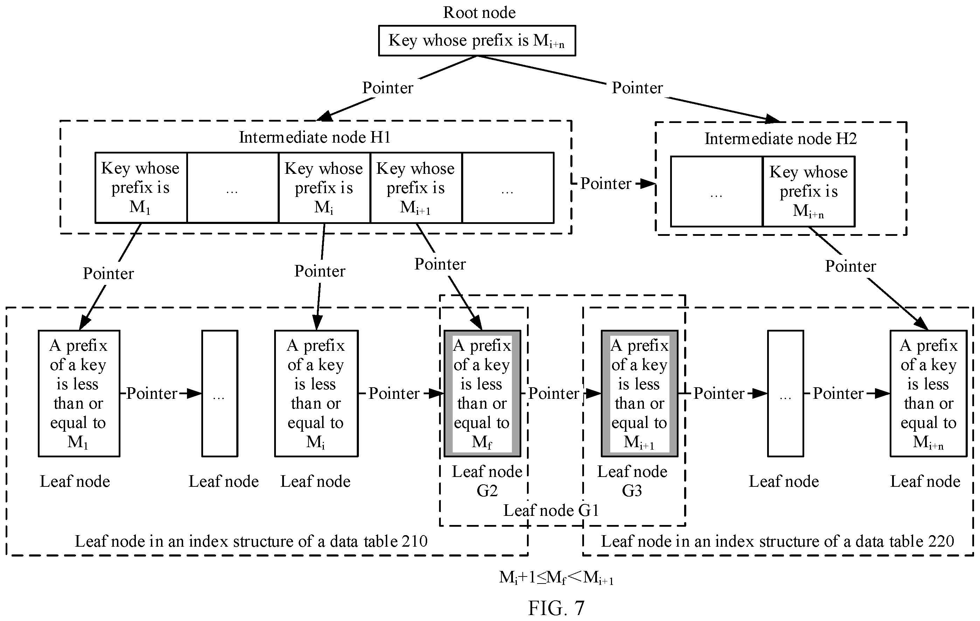

In an example, refer to FIG. 7. It may be assumed that the mapped value F1 is M_{f}, where Mᵢ+1≤M_{f}<Mᵢ₊₁. In other words, the metadata of the object corresponding to the mapped value F1 is recorded in the leaf node G1. In step 502b, the leaf node G1 is split into a leaf node (that is, the leaf node G2) that records metadata of a key whose prefix is less than or equal to M_{f} and a leaf node (that is, the leaf node G3) that records metadata of a key whose prefix is less than or equal to Mᵢ₊₁ based on a location of metadata (that is, metadata of a key whose prefix is M_{f}) of an object corresponding to M_{f} in the leaf node G1.

In some embodiments, as shown in FIG. 7, after the leaf node G1 is split into the leaf node G2 and the leaf node G3, the leaf node G2 inherits a page node identifier of the leaf node G1 (for example, an address of a storage page of the leaf node G1), so that a pointer pointed by a page node at an upper layer of the leaf node to the leaf node G1 points to the leaf node G2. A pointer pointing from the leaf node G2 to the leaf node G3 may be created. The leaf node G3 records the pointer. In this way, when no corresponding data is found in the leaf node G2, the leaf node G3 is jumped to by using the pointer, to query for the data in the leaf node G3.

In an example of this embodiment, the leaf node G2 is provided with a being-split-mapped value (being-split-mapped value) field, and the field is used to record a split-mapped value of current splitting. A case shown in FIG. 7 is used as an example. The field records M_{f}. The pointer pointed by the page node at the upper layer of the leaf node to the leaf node G1 points to the leaf node G2, and metadata of an object corresponding to a mapped value in [M_{f}+1, Mᵢ₊₁] is recorded in the leaf node G3 or needs to be recorded in the leaf node G3. Therefore, when a mapped value of an object to be queried for or recorded is greater than M_{f}, it indicates that metadata of the object is recorded in or needs to be recorded in the leaf node G3. In this case, the leaf node G3 is jumped to by using the pointer that points to the leaf node G3 and that is recorded by the leaf node G2 for querying or recording.

In an example of this embodiment, the index structure of the shard 200 is specifically a B-link tree, so that the leaf node G2 has the pointer pointing to the leaf node G3, and splitting of the shard is implemented without incremental write back.

In some embodiments, as shown in FIG. 6, the index structure of the shard 200 includes a plurality of intermediate nodes, for example, an intermediate node H1 and an intermediate node H2. The plurality of intermediate nodes are page nodes at a layer above the leaf nodes in the index structure of the shard 200. One intermediate node points to one or more leaf nodes by using a pointer. The intermediate node records a key range, and the key range includes a key of an object in each leaf node pointed to by the intermediate node. In other words, the intermediate node records a key range to which the key of the object in each leaf node pointed to by the intermediate node belongs. An arrangement sequence of the plurality of intermediate nodes is consistent with a size sequence of key ranges recorded by the plurality of intermediate nodes. A size of the key range is a size of the key in the key range, and the size of the key range may be represented by a size of any key in the key range.

Prefixes of keys of objects (that is, mapped values corresponding to the objects) in the leaf node pointed to by the intermediate node constitute a mapping sub-range, and the intermediate node corresponds to the mapping sub-range. In other words, the intermediate node corresponds to the mapping sub-range, and the mapping sub-range includes the mapped values corresponding to the objects in the leaf node pointed to by the intermediate node. As described above, the size of the key is positively correlated with a size of the mapped value. Therefore, the arrangement sequence of the plurality of intermediate nodes in the index structure of the shard 200 is consistent with a size sequence of mapping sub-ranges corresponding to the plurality of intermediate nodes. A size of the mapping sub-range is a size of a mapped value in the mapping sub-range, and the size of the mapping sub-range may be represented by a size of any mapped value in the mapping sub-range.

When the index structure of the shard 200 is split, the plurality of intermediate nodes may be directly split into an intermediate node in the index structure of the shard 210 and an intermediate node in the index structure of the shard 220 by using a key whose prefix is the mapped value F1 as a split point S4 (which is also referred to as an intermediate node split point, and is a split point for splitting an intermediate node). Details are as follows:

It may be assumed that the key whose prefix is the mapped value F1 (that is, a key of the object corresponding to the mapped value F1) is located in a key range recorded by the intermediate node H1, in other words, the key range recorded by the intermediate node H1 includes the key whose prefix is the mapped value F1. In step 502b, the intermediate node H1 may be split into an intermediate node H11 and an intermediate node H12 based on the key of the object corresponding to the mapped value F1 and the key range recorded by the intermediate node H1. A key range recorded by the intermediate node H11 includes a key of an object in the leaf node G2, and a key range recorded by the intermediate node H12 includes a key in the leaf node G3. Specifically, it may be assumed that the key whose prefix is the mapped value F1 is specifically located in a key range J1 recorded by the intermediate node H1. The key range J1 is split into a key range J11 and a key range J12 by using the key whose prefix is the mapped value F1 as the split point S4. The key range J11 includes the key of the object in the leaf node G2, and the key range J12 includes the key of the object in the leaf node G3. The key range recorded by the intermediate node H1 is updated, and the updated intermediate node H1 is used as the intermediate node H11. The key range recorded by the intermediate node H11 includes the key range J11 and a key range that is in the key range recorded by the intermediate node H1 and that is less than the key range J11. The intermediate node H12 is created, and the key range J12 and a key range that is in the key range recorded by the intermediate node H1 and that is larger than the key range J12 are recorded in the intermediate node H12.

In other words, the mapped value F1 is located in a mapping sub-range corresponding to the intermediate node H1. In step 502b, the mapping sub-range corresponding to the intermediate node H1 is split into a mapping sub-range corresponding to the intermediate node H11 and a mapping sub-range corresponding to the intermediate node H12 by using the mapped value F1 as a split point S4'.

As shown in FIG. 6, the leaf nodes may be arranged from left to right in an ascending order of key ranges. In this case, the intermediate node H11 may be referred to as a left intermediate node obtained through splitting, and the intermediate node H12 may be referred to as a right intermediate node obtained through splitting.

In the key range recorded by the intermediate node H1, a key whose prefix is less than the mapped value F1 and the key whose prefix is the mapped value F1 may be recorded in the intermediate node H11, and a key whose prefix is greater than the mapped value F1 may be recorded in the intermediate node H12. The intermediate node H11 and an intermediate node whose key range is less than the key range of the intermediate node H11 are used as intermediate nodes in the index structure of the shard 210; and the intermediate node H12 and an intermediate node whose key range is greater than the key range recorded by the intermediate node H12 are used as intermediate nodes in the index structure of the shard 220. In other words, the intermediate node H11 and an intermediate node whose corresponding mapping sub-range is less than the mapping sub-range corresponding to the intermediate node H11 are used as intermediate nodes in the index structure of the shard 210; and the intermediate node H12 and an intermediate node whose corresponding mapping sub-range is greater than the mapping sub-range corresponding to the intermediate node H12 are used as intermediate nodes in the index structure of the shard 220.

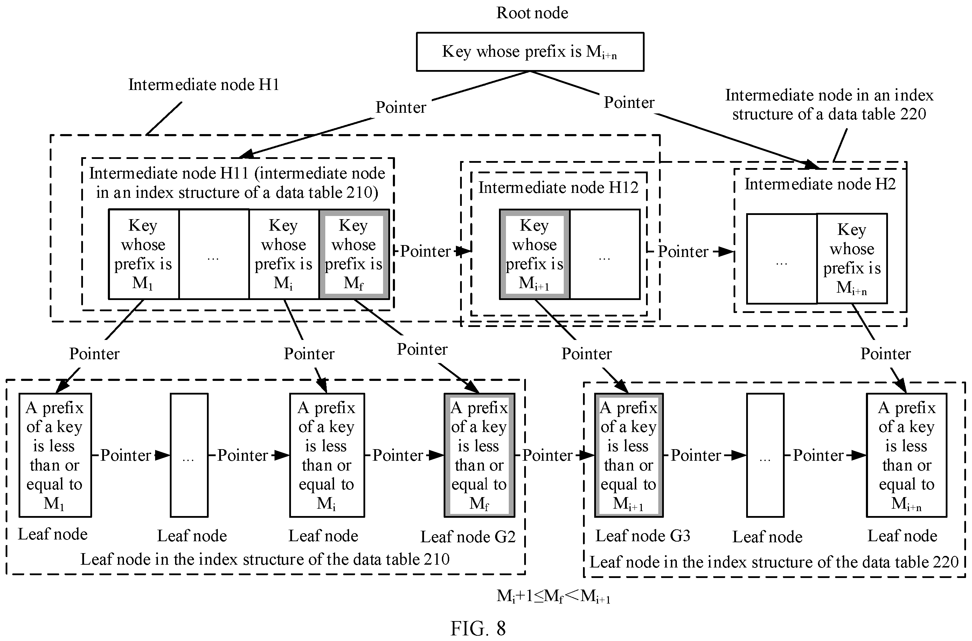

More specifically, refer to FIG. 8. It may be assumed that the mapped value F1 is M_{f}, and it may be assumed that the key range recorded by the intermediate node H1 includes a key whose prefix is Mᵢ+1 and a key whose prefix is Mᵢ₊₁. Mᵢ+1≤M_{f}<Mᵢ₊₁, that is, the key record with the prefix M_{f} belongs to the key range recorded by the intermediate node H1. In step 502b, the intermediate node H1 is split into the intermediate node H11 and the intermediate node H12 by using the key whose prefix is M_{f} as the split point S4. In the key range recorded by the intermediate node H1, a key whose prefix is less than M_{f} and the key whose prefix is M_{f} are recorded in the intermediate node H11, and a key whose prefix is greater than M_{f} is recorded in the intermediate node H12.

After the intermediate node H1 is split into the intermediate node H11 and the intermediate node H12, a pointer pointing from the intermediate node H12 to a lower-layer node may be created. A prefix of a maximum key in the key range recorded by the intermediate node H12 is M_{f}+1, and a pointer from the intermediate node H12 to the leaf node (that is, the leaf node G3) of the metadata of the key whose prefix is less than or equal to Mᵢ₊₁ may be created.

The intermediate node H11 inherits a page node identifier of the intermediate node H1, so that a pointer pointing to the intermediate node H1 points to the intermediate node H11. A pointer pointing from the intermediate node H11 to the intermediate node H12 may be created. The intermediate node H11 records the pointer. In this way, when a corresponding key is not found in the intermediate node H11, the intermediate node H12 may be jumped to by using the pointer, to query for the key in the intermediate node H12. In this way, the intermediate node can be split without performing incremental write back.

When the index structure of the shard 200 includes a plurality of layers of intermediate nodes, an intermediate node at each layer may be split by referring to the foregoing manner, to obtain an intermediate node in the index structure of the shard 210 and an intermediate node in the index structure of the shard 220. Details are not described herein again.

In some embodiments, the index structure of the shard 200 further includes a root node. A prefix of a key recorded by the root node is a value in the mapping range associated with the data table 200, that is, a value in the mapping range 300. Therefore, it may be referred to as the root node in the index structure of the shard 200 corresponding to the mapping range 300. The root node is an entry of the index structure of the shard, and a query operation and another operation may be performed in the shard by using the root node. For ease of description, the root node in the index structure of the shard may be referred to as a root node of the shard. In step 502b, the root node of the shard 200 is split into a root node of the shard 210 and a root node of the shard 220 by using the key whose prefix is the mapped value F1 as a split point S5 (which is also referred to as a root node split point, and is a split point for splitting a root node).

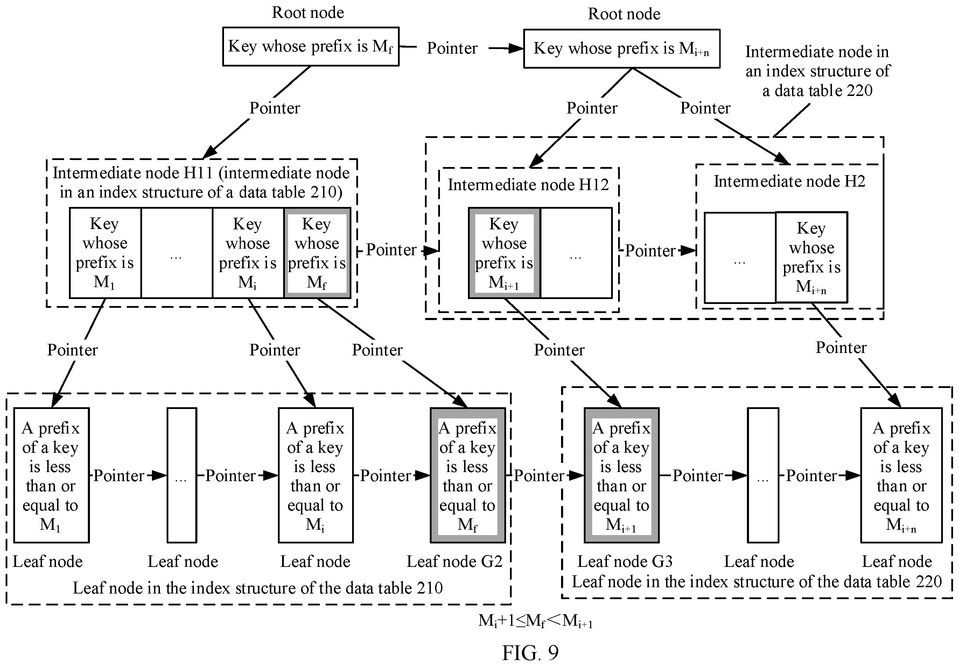

Specifically, as shown in FIG. 9, it may be assumed that the mapped value F1 is M_{f}, and the mapping range 300 is a mapping range [M₀, Mᵢ₊ₙ], that is, M_{f} belongs to the mapping range [M₀, Mᵢ₊ₙ]. In step 502b, the root node of the shard 200 is split into the root node of the shard 210 and the root node of the shard 220 by using the key whose prefix is M_{f} as the split point S5. A mapping range [M₀, M_{f}] is used as the mapping range 310, and corresponds to the root node of the data table 210. A mapping range [M_{f}+1, Mᵢ₊ₙ] is used as the mapping range 320, and corresponds to the root node of the data table 220.

The root node of the shard 210 retains or inherits a pointer pointing from the root node of the shard 200 to a lower-layer node. A pointer pointing from the root node of the shard 220 to an intermediate node in the index structure of the shard 220, for example, the intermediate node H12 or the intermediate node H2, may be created.

A pointer pointing from the root node of the shard 210 to the root node of the shard 220 may be created. In this way, when a corresponding mapped value is not found in the root node of the shard 210, the root node of the shard 220 may be jumped to by using the pointer, to query for the mapped value in the root node of the shard 220. In this way, the root node can be split without performing incremental write back.

In this way, splitting of the index structure of the shard 200 can be completed.

In the foregoing descriptions, an example in which metadata of an object corresponding to the split-mapped value is located on a left leaf node obtained through splitting, and a key prefixed with the split-mapped value is located on a left intermediate node and the root node is used for description. In another embodiment, metadata corresponding to the split-mapped value is located on a right leaf node obtained through splitting, and a key prefixed with the split-mapped value is located on a right intermediate node and the root node. Details are not described herein.

Step 503: Associate the mapping range 310 with the shard 210, and associate the mapping range 320 with the shard 220.

The shard map may record association between the mapping range 310 and the shard 210 and association between the mapping range 320 and the shard 220. Specifically, the mapping range 300 recorded in the shard map is split into the mapping range 310 and the mapping range 320. The mapping range 310 recorded in the shard map is associated with the shard 210, and the mapping range 320 is associated with the shard 220. An operation for the object may be forwarded to the shard 210 or the shard 220 for processing based on the shard map and the mapped value of the object. In this way, the shard 210 and the shard 220 obtained by splitting the shard 200 may be used as independent shards, that is, independent shards of the inode distribution table of the directory a, for storage or access.

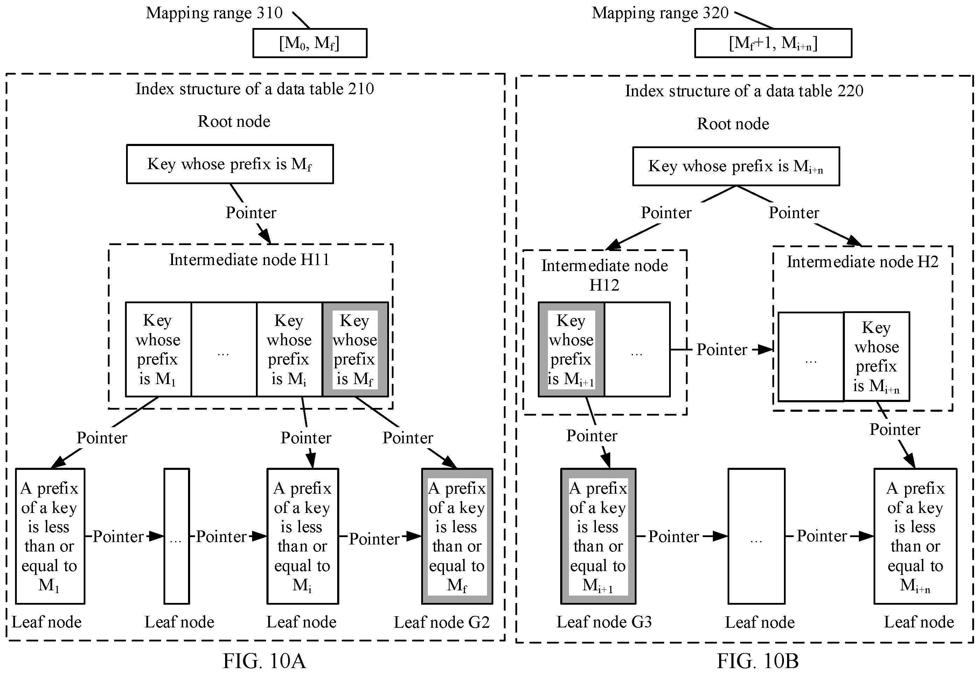

In some embodiments, refer to FIG. 10A and FIG. 10B. The shard 210 obtained by splitting the shard 200 has an independent index structure, and the shard 220 also has an independent index structure. In this way, there is no conflict between an access request for the shard 210 and an access request for the shard 220, thereby improving a concurrent execution level of the inode distribution table of the directory.

In some embodiments, as described above, a left page node obtained through splitting has a pointer pointing to a right page node. After step 503, a pointer from the left page node to the right page node may be created, to reduce a storage space.

In some embodiments, after step 503, the storage node 110 may send the shard 210 or the shard 220 to the storage node 120, to store and access the shard 210 or the shard 220 in the storage node 120, so as to eliminate the access hotspot problem of the storage node 110.

In conclusion, according to the method provided in this embodiment of this application, when the shard is split, metadata or a snapshot of metadata does not need to be copied, and incremental write back does not need to be performed. Therefore, consumption of a processor resource, a memory resource, and the like is extremely low. The metadata or the snapshot of the metadata does not need to be copied, and incremental write back does not need to be performed. Therefore, splitting is fast and takes an extremely short time, so that the concurrent access level of the inode distribution table can be quickly improved, and a problem like the access hotspot can be eliminated. In addition, the metadata can be written normally during combination, and metadata write interruption may not be caused. In addition, splitting consumes a minimal resource, and takes an extremely short time, which can ensure that the shard is always small (in other words, records metadata of fewer objects), and facilitate migration of the shard between different storage nodes, quickly achieving load balancing and scaling between the storage nodes. In particular, when an index structure of a shard is split, only a page node at a split point is split, and an operation for another page node is not affected. Therefore, a split operation has little impact on a service.

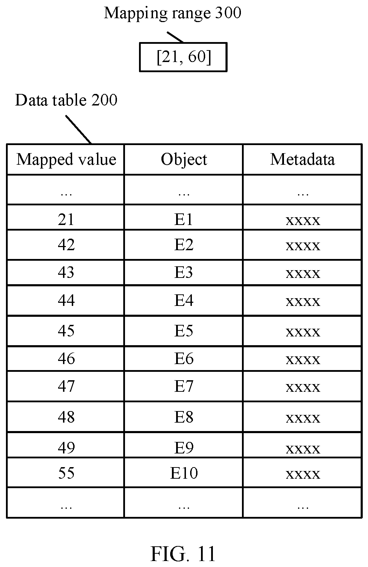

The following describes, in a specific example, the method provided in this embodiment of this application. Refer to FIG. 11. It may be assumed that the mapping range 300 is specifically [21, 60]. The shard 200 records metadata of a plurality of objects in the directory a, for example, an object E1, an object E2, an object E3, an object E4, an object E5, an object E6, an object E7, an object E8, an object E9, and an object E10. Mapped values corresponding to the plurality of objects belong to the mapping range 200. A mapped value corresponding to the object E1 is 21, a mapped value corresponding to the object E2 is 42, a mapped value corresponding to the object E3 is 43, a mapped value corresponding to the object E4 is 44, a mapped value corresponding to the object E5 is 45, a mapped value corresponding to the object E6 is 46, a mapped value corresponding to the object E7 is 47, a mapped value corresponding to the object E8 is 48, a mapped value corresponding to the object E9 is 49, and a mapped value corresponding to the object E10 is 55.

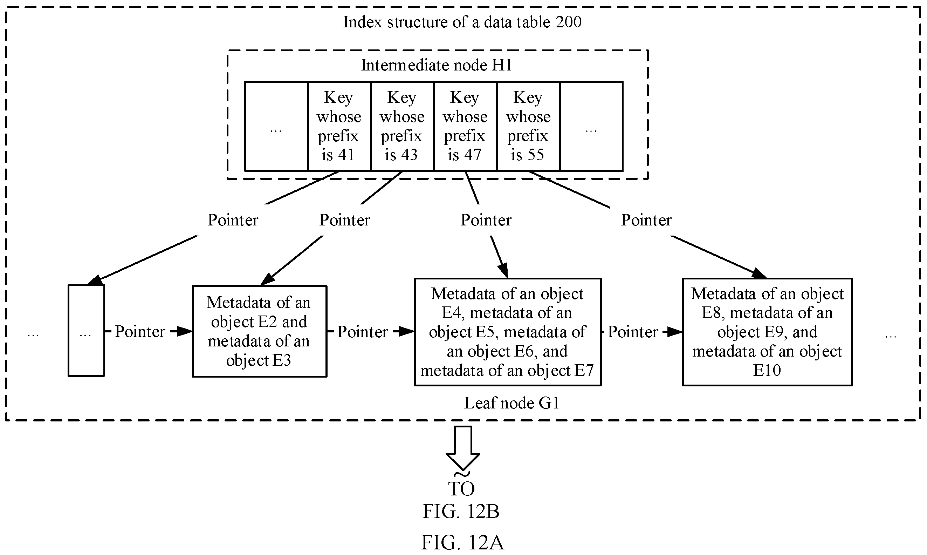

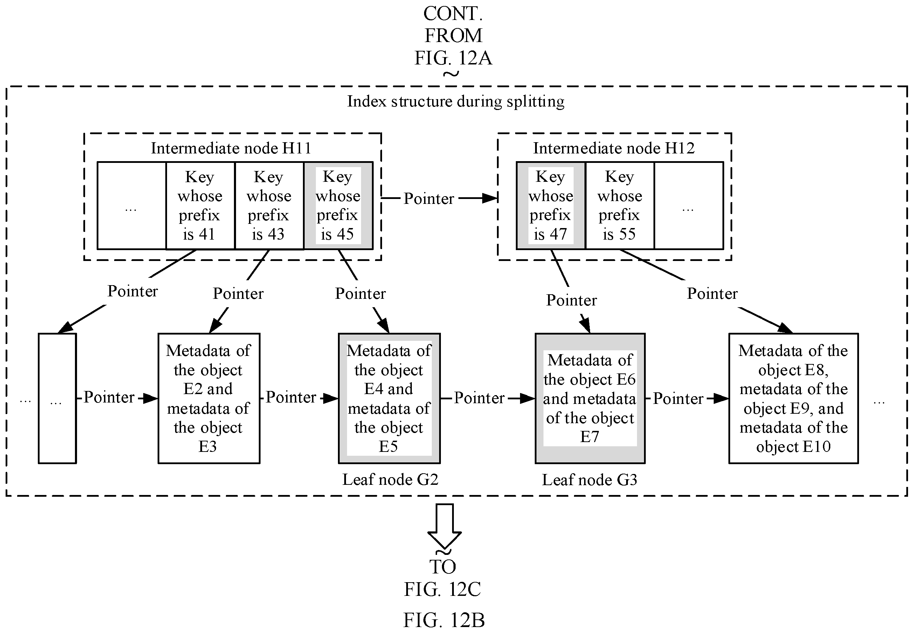

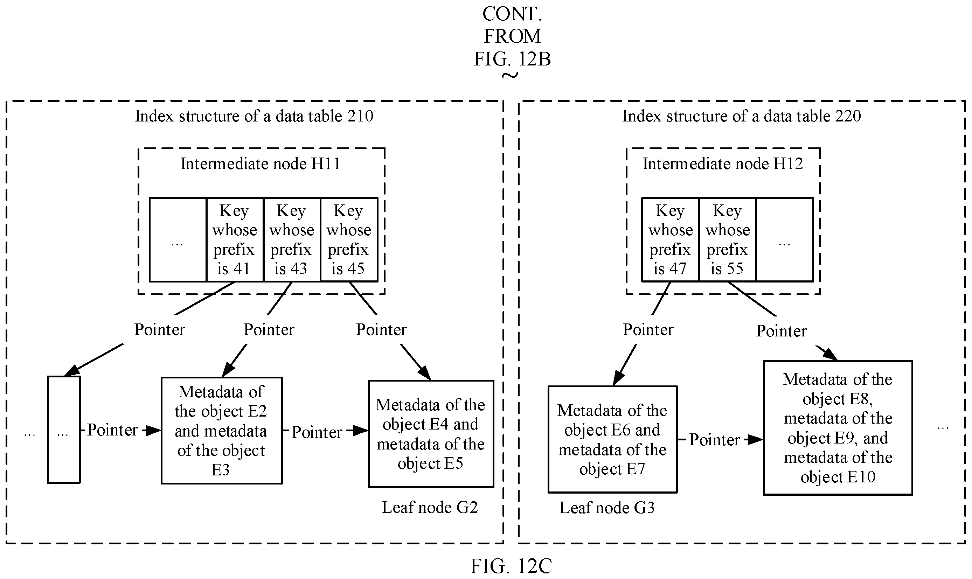

Refer to FIG. 12A to FIG. 12C. It may be assumed that the intermediate node H1 in the index structure of the shard 200 records a plurality of key ranges such as a key range whose prefix of a maximum key is 55, a key range whose prefix of a maximum key is 47, and a key range whose prefix of a maximum key is 43. In addition, in the intermediate node H1, an arrangement sequence of these ranges is consistent with a size sequence of the key ranges. The intermediate node H1 points to a plurality of leaf nodes. A leaf node that records metadata of the object E2 and metadata of the object E3 corresponds to the key range whose prefix of the maximum key is 43, the leaf node G1 that records metadata of the object E4, metadata of the object E5, metadata of the object E6, and metadata of the object E7 corresponds to the key range whose prefix of the maximum key is 47, and a leaf node that records metadata of the object E8, metadata of the object E9, and metadata of the object E10 corresponds to the key range whose prefix of the maximum key is 55.

It may be assumed that the split-mapped value (that is, the mapped value F1) is 45. The key range whose prefix of the maximum key is 47 is split into a key range whose prefix of a maximum key is 45 and the key range whose prefix of the maximum key is 47 by using a key whose prefix is 45 as the split point S4. A key range that is recorded by the intermediate node H1 and that is less than the key range whose prefix of the maximum key is 45 and the key range whose maximum key is 45 are recorded in the intermediate node H11. A key range that is recorded by the intermediate node H1 and that is greater than the key range whose prefix of the maximum key is 45 is recorded in the intermediate node H12. In this way, the intermediate node H1 is split into the intermediate node H11 and the intermediate node H12. The intermediate node H11 has a pointer pointing to the intermediate node H12.

45 corresponds to the object E5, and the metadata of the object E5 is recorded in the leaf node G1. In the leaf node G1, an arrangement sequence of metadata of objects is consistent with a size sequence of mapped values corresponding to the objects. The leaf node is split into the leaf node G2 and the leaf node G3 based on a location of the metadata of the object E5 in the leaf node G1. The leaf node G2 records the metadata of the object E4 and the metadata of the object E5, and the leaf node G2 records the metadata of the object E6 and the metadata of the object E7. In addition, the leaf node G2 has the pointer pointing to the leaf node G3.

A pointer from the intermediate node H11 to the leaf node G2 is created, and a pointer from the intermediate node H12 to the leaf node G3 is created.

After step 503 is completed, the pointer pointing from the intermediate node H11 to the intermediate node H12, the pointer pointing from the leaf node G2 to the leaf node G3, and another pointer pointing from a node in the index structure of the shard 210 to a node in the index structure of the shard 220 may be deleted.

In this way, splitting of the shard 200 is completed, and the two independent shards 210 and 220 are obtained.

An embodiment of this application further provides a data processing method. In the method, shards of an inode distribution table can be quickly combined. The method is still described by using an example in which the storage node 110 performs the method.

The storage node stores a shard 400. The shard 400 may be a shard of an inode distribution table of a directory a. In other words, the shard 200 and the shard 400 are two different shards of the inode distribution table of the directory a. The shard 400 is associated with a mapping range 500. The mapping range 500 is adjacent to the mapping range 300. A lower endpoint of the mapping range 500 is adjacent to an upper endpoint of the mapping range 300 (in other words, the lower endpoint of the mapping range 500 is greater than the upper endpoint of the mapping range 300, and there is no mapped value between the lower endpoint of the mapping range 500 and the upper endpoint of the mapping range 300), or an upper endpoint of the mapping range 500 is adjacent to a lower endpoint of the mapping range 300 (in other words, the lower endpoint of the mapping range 300 is greater than the upper endpoint of the mapping range 500, and there is no mapped value between the lower endpoint of the mapping range 300 and the upper endpoint of the mapping range 500). A lower endpoint of a mapping range is a minimum mapped value in the mapping range, and an upper endpoint is a maximum mapped value in the mapping range.

The shard 400 also records metadata of at least one object in the directory a. A mapped value corresponding to the object of the metadata recorded in the shard 400 belongs to the mapping range 500. For example, an arrangement sequence of the metadata of the at least one object in the shard 400 is consistent with a size sequence of mapped values corresponding to the at least one object.

In some scenarios, for example, when both the shard 400 and the shard 200 are small, the shard 400 and the shard 300 may be combined. That the shard is small means that the shard records metadata of fewer objects.

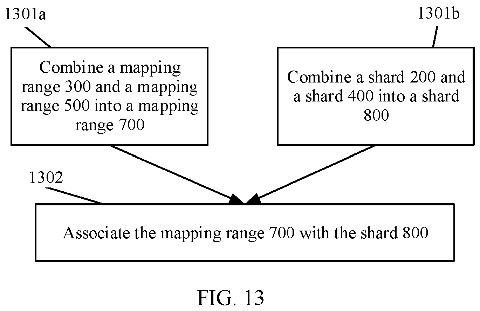

Refer to FIG. 13. A splitting procedure for the shard 200 may include the following steps. These steps may be performed by a management module in the storage node 110.

Step 1301a: Combine the mapping range 300 and the mapping range 500 into a mapping range 700.

As described above, the mapping range 300 is adjacent to the mapping range 500, and the mapping range 300 and the mapping range 500 may be directly combined into a large mapping range, to obtain the mapping range 700. Specifically, if the lower endpoint of the mapping range 500 is adjacent to the upper endpoint of the mapping range 300, the lower endpoint of the mapping range 300 is used as a lower endpoint of the mapping range 700, and the upper endpoint of the mapping range 500 is used as an upper endpoint of the mapping range 700. If the upper endpoint of the mapping range 500 is adjacent to the lower endpoint of the mapping range 300, the lower endpoint of the mapping range 500 is used as a lower endpoint of the mapping range 700, and the upper endpoint of the mapping range 300 is used as an upper endpoint of the mapping range 700.

Step 1301b: Combine the shard 200 and the shard 400 into a shard 800.

The shard 200 may be directly connected to a tail of the shard 400, or the shard 400 is connected to a tail of the shard 200, to obtain the shard 800.

In some embodiments, the shard 200 and the shard 400 each have a plurality of tuples. A tuple in the shard 200 may be directly recorded under a tuple in the shard 400, or a tuple in the shard 400 may be recorded under the shard 200, to obtain the shard 800.

In some embodiments, as described above, the arrangement sequence of the metadata of the objects in the shard 200 is consistent with the size sequence of the mapped values corresponding to the objects, and the arrangement sequence of the metadata of the objects in the shard 400 is consistent with the size sequence of the mapped values corresponding to the objects. The shard 200 is connected to the tail of the shard 400, or the shard 400 is connected to the tail of the shard 200 based on a size of the mapping range 300 and the mapping range 500, so that an arrangement sequence of metadata of objects in the shard 800 is consistent with a size sequence of mapped values corresponding to the objects.

In some embodiments, in step 1301b, an index structure of the shard 200 and an index structure of the shard 400 are combined, to obtain an index structure of the shard table 800. The index structure of the shard 200 and the index structure of the shard 400 use a same tree structure, for example, both are B trees, B+ trees, or B-link trees.

A tree index structure is a hierarchical and tree-shaped index structure with a plurality of layers. Based on whether a quantity of layers of the index structure of the shard 200 is the same as a quantity of layers of the index structure of the shard 400, combination of the index structures may be divided into the following two cases:

Case 1: The quantity of layers of the index structure of the shard 200 is consistent with the quantity of layers of the index structure of the shard 400. That the quantity of layers of the index structure of the shard 200 is consistent with the quantity of layers of the index structure of the shard 400 may also be referred to as a height of the index structure of the shard 200 being consistent with a height of the index structure of the shard 400.

In Case 1, a root node in the index structure of the shard 200 and a root node in the index structure of the shard 400 may be directly combined to obtain a root node in the index structure of the shard 800. That the root node in the index structure of the shard 200 is combined with the root node in the index structure of the shard 400 may mean recording a key in the root node in the index structure of the shard 200 into the root node in the index structure of the shard 400, or recording a key in the root node in the index structure of the shard 400 into the root node in the index structure of the shard 200.

In this embodiment of this application, if a prefix of a key recorded by a page node belongs to a specific mapping range, it may be referred to as the page node corresponding to the mapping range. The root node in the index structure of the shard 800 records the key in the root node in the index structure of the shard 200 and the key in the root node in the index structure of the shard 200. That is, a prefix of a key in the root node in the index structure of the shard 800 is a value in a union set of the mapping range 300 and the mapping range 400. Therefore, it may be referred to as the root node in the index structure of the shard 800 corresponding to the mapping range 300 and the mapping range 400.

If the root node in the index structure of the shard 200 and the root node in the index structure of the shard 400 are combined, a quantity of keys that need to be recorded in the root node exceeds a maximum quantity of keys that can be accommodated by the root node. In this case, the root node in the index structure of the shard 200 and the root node in the index structure of the shard 200 are not combined, but a new root node is created based on the root node in the index structure of the shard 200 and the root node in the index structure of the shard 400. The new root node is used as the root node in the index structure of the shard 800. The root node in the index structure of the shard 800 corresponds to the mapping range 300 and the mapping range 500, in other words, a prefix of a key recorded by a node in the index structure of the shard 800 is an element in the union set of the mapping range 300 and the mapping range 500. Then, a pointer pointing from the root node in the index structure of the shard 800 to the root node in the index structure of the shard 200 is created, and a pointer pointing from the root node in the index structure of the shard 800 to the root node in the index structure of the shard 400 is created. In this case, the root node in the index structure of the shard 200 and the root node in the index structure of the shard 400 become intermediate nodes of the shard 800.

Case 2: The quantity of layers of the index structure of the shard 200 is greater than the quantity of layers of the index structure of the shard 400, in other words, a height of the index structure of the shard 200 is greater than a height of the index structure of the shard 400.

In Case 2, the mapping range 500 is corresponded to a root node in the index structure of the shard 200. Because the root node in the index structure of the shard 200 corresponds to the mapping range 300 and the mapping range 500, the root node is used as a root node in the index structure of the shard 800. Then, a pointer pointing from the root node in the index structure of the shard 800 to a root node in the index structure of the shard 400 is created. In this case, the root node in the index structure of the shard 400 becomes an intermediate node of the shard 800.

If a key in the root node in the index structure of the shard 400 is recorded in the root node in the index structure of the shard 200, a quantity of keys that need to be recorded in the root node exceeds a maximum quantity of keys that can be accommodated by the root node. In this case, a new root node is created based on the root node in the index structure of the shard 400 and the root node in the index structure of the shard 200. The new root node is used as the root node of the index node of the shard 800. The root node in the index structure of the shard 800 corresponds to the mapping range 300 and the mapping range 500. Then, a pointer pointing from the root node in the index structure of the shard 800 to the root node in the index structure of the shard 200 is created, and a pointer pointing from the root node in the index structure of the shard 800 to the root node in the index structure of the shard 400 is created. In this case, the root node in the index structure of the shard 200 and the root node in the index structure of the shard 400 become intermediate nodes of the shard 800.

Case 3: The quantity of layers of the index structure of the shard 400 is greater than the quantity of layers of the index structure of the shard 200, in other words, a height of the index structure of the shard 400 is greater than a height of the index structure of the shard 200.

In Case 3, the mapping range 300 is corresponded to a root node in the index structure of the shard 400, to be specific, a key recorded in a root node in the index structure of the shard 200 is recorded in the root node in the index structure of the shard 400. Because the root node in the index structure of the shard 400 corresponds to the mapping range 300 and the mapping range 500, the root node is used as a root node in the index structure of the shard 800. Then, a pointer pointing from the root node in the index structure of the shard 800 to the root node in the index structure of the shard 200 is created. In this case, the root node in the index structure of the shard 200 becomes an intermediate node of the shard 800.

If a key in the root node in the index structure of the shard 200 is recorded in the root node in the index structure of the shard 400, a quantity of keys that need to be recorded in the root node exceeds a maximum quantity of keys that can be accommodated by the root node. In this case, a new root node is created based on the root node in the index structure of the shard 200 and the root node in the index structure of the shard 400. The new root node is used as the root node of the index node of the shard 800, and is used to correspond to the mapping range 300 and the mapping range 500. Then, the pointer pointing from the root node in the index structure of the shard 800 to the root node in the index structure of the shard 200 is created, and a pointer pointing from the root node in the index structure of the shard 800 to the root node in the index structure of the shard 400 is created. In this case, the root node in the index structure of the shard 200 and the root node in the index structure of the shard 400 become intermediate nodes of the shard 800.

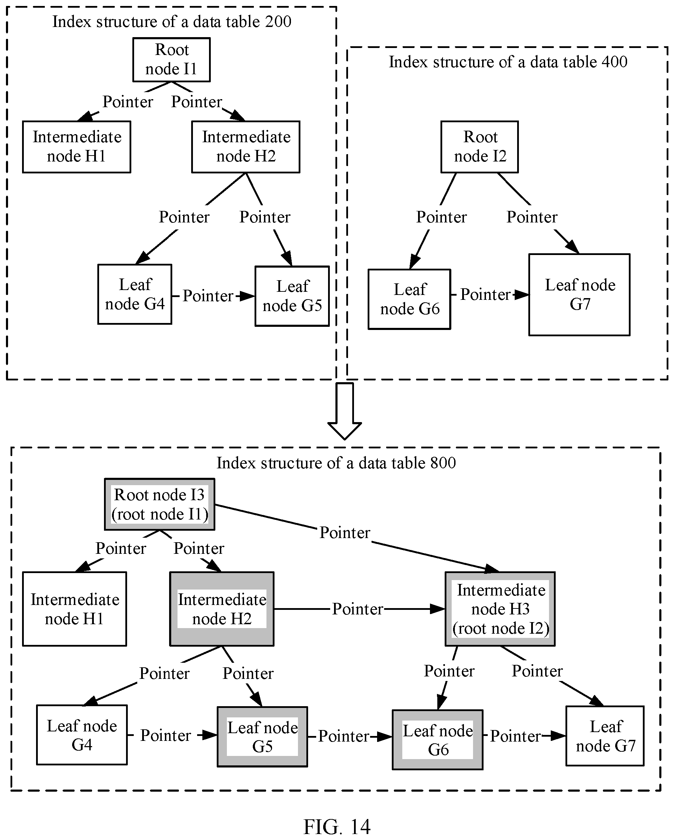

In some embodiments, the index structure of the shard 200 and the index structure of the shard 400 are both B-link trees, and the index structure of the shard 800 is also required to be a B-link tree. In this case, in the embodiments, a pointer between a node in the index structure of the shard 200 and a node in the index structure of the shard 400 is created. Details are as follows:
Refer to FIG. 14. It may be assumed that the mapping range 300 is less than the mapping range 500, and the index structure of the shard 200 may be placed on the left of the index structure of the shard 400. In the index structure of the shard 200 and the index structure of the shard 400, locations of page nodes are sorted from left to right in ascending order of corresponding mapping ranges. The page node herein includes a leaf node and an intermediate node.

A pointer pointing from a rightmost leaf node in the index structure of the shard 200 to a leftmost leaf node in the index structure of the shard 400 may be created. In this way, a relationship between leaf nodes in the index structure of the shard 800 meets a requirement of the B-link tree. In an example, as shown in FIG. 14, it may be assumed that the index structure of the shard 200 includes a leaf node G4 and a leaf node G5, and the index structure of the shard 400 includes a leaf node G6 and a leaf node G7. The leaf node G5 is the rightmost leaf node in the index structure of the shard 200, and the leaf node G6 is the leftmost leaf node in the index structure of the shard 400. When the index structure of the shard 200 and the index structure of the shard 400 are combined, a pointer pointing from the leaf node G5 to the leaf node G6 may be created.

Starting from the leaf nodes upwards, intermediate nodes in the index structure of the shard 200 may be established layer by layer, and pointers pointing to the intermediate nodes in the index structure of the shard 200 are established. Details are not described herein again.

If the height of the index structure of the shard 200 is inconsistent with the index height of the shard 400, a mapping range associated with an index structure with a low height is corresponded to a root node in an index structure with a high height (in other words, a key in a root node in the index structure with the low height is recorded in the root node of the index structure with the high height), a pointer pointing from the root node of the index structure with the high height to the root node of the index structure with the low height is created, and a pointer pointing from an intermediate node of the index structure with the high height to the root node of the index structure with the low height is created.

In an example, as shown in FIG. 14, it may be assumed that the height of the index structure of the shard 200 is 3, in other words, the index structure has three layers. The index structure includes an intermediate node H1 and an intermediate node H2, and the intermediate node H2 is a rightmost intermediate node in the index structure. It may be further assumed that the height of the index structure of the shard 200 is 2, in other words, the index structure has two layers. The index structure includes a root node I2. In this example, a pointer pointing from the intermediate node H2 to the root node I2 may be created. In addition, after the mapping range 500 is corresponded to a root node I1 (in other words, a key value recorded by the root node I2 is recorded in the root node 11), a pointer from the root node I1 to the root node I2 is created. After combination, the root node I2 becomes an intermediate node H3 of the index structure of the shard 800, and the root node I1 becomes a root node I3 of the index structure of the shard 800.

If the height of the index structure of the shard 200 is consistent with the index height of the shard 400, the intermediate nodes in the index structure of the shard 200 may be established layer by layer, and the pointers pointing to the intermediate nodes in the index structure of the shard 200 are established. Details are not described herein again.

For a manner of combining the root nodes, refer to the foregoing descriptions of Cases 1, 2, and 3. Details are not described herein again.

Still refer to FIG. 13. In step 1302, the mapping range 700 is associated with the shard 800. A shard map may record association between the mapping range 700 and the shard 800. Specifically, the mapping range 300 and the mapping range 500 that are recorded in the shard map may be combined to obtain the mapping range 700. The mapping range 700 in the shard map is then associated with the shard 800. At this point, combination of the shard 200 and the shard 400 is completed.

According to the method provided in this embodiment of this application, when the shards are combined, metadata or a snapshot of metadata does not need to be copied, and incremental write back does not need to be performed. Therefore, consumption of a processor resource, a memory resource, and the like is extremely low. The metadata or the snapshot of the metadata does not need to be copied, and incremental write back does not need to be performed. Therefore, a combination speed is fast, and consumed time is extremely short, so that combination of the shards can be completed quickly. In addition, the metadata can be written normally during combination, and metadata write interruption may not be caused. In particular, when the index structures of the shards are combined, access to the shard is not affected, so that combination of the shards does not affect a service.

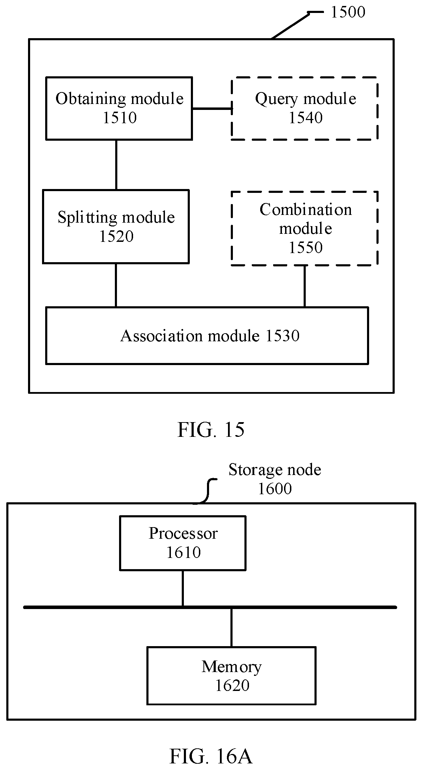

Refer to FIG. 15. An embodiment of this application provides a data processing apparatus 1500. The apparatus 1500 is configured to manage a first shard. The first shard is associated with a first mapping range, the first shard records metadata of a plurality of objects in a directory, mapped values corresponding to the plurality of objects belong to the first mapping range, and an arrangement sequence of the metadata of the plurality of objects in the first shard is consistent with a size sequence of the mapped values corresponding to the plurality of objects. As shown in FIG. 15, the apparatus 1500 includes:
an obtaining module 1510, configured to obtain a first mapped value, where the first mapped value belongs to the first mapping range;
a splitting module 1520, configured to: split the first mapping range into a second mapping range and a third mapping range by using the first mapped value as a first split point; and split the first shard into a second shard and a third shard by using a location of metadata of an object corresponding to the first mapped value in the first shard as a second split point, where a mapped value corresponding to an object in the second shard belongs to the second mapping range, and a mapped value corresponding to an object in the third shard belongs to the third mapping range; and
an association module 1530, configured to: associate the second mapping range with the second shard, and associate the third mapping range with the third shard.

In some embodiments, an index structure of the first shard includes a plurality of leaf nodes, the leaf node records metadata of one or more of the plurality of objects, an arrangement sequence of the plurality of leaf nodes is consistent with a size sequence of mapped values corresponding to objects in the plurality of leaf nodes, and in the leaf node, an arrangement sequence of metadata of objects is consistent with a size sequence of mapped values corresponding to the objects; and
the splitting module 1520 is configured to: split a first leaf node into a second leaf node and a third leaf node by using a location of the metadata of the object corresponding to the first mapped value in the first leaf node as a third split point, where the second leaf node and a fourth leaf node in the plurality of leaf nodes are used as leaf nodes in an index structure of the second shard, and the third leaf node and a fifth leaf node in the plurality of leaf nodes are used as leaf nodes in an index structure of the third shard; and a mapped value corresponding to an object in the fourth leaf node is less than the first mapped value, and a mapped value corresponding to an object in the fifth leaf node is greater than the first mapped value.

In an example of this embodiment, the index structure of the first shard includes a first intermediate node, and a key range recorded by the first intermediate node includes a key of an object in the first leaf node; and the splitting module 1520 is configured to split the first intermediate node into a second intermediate node and a third intermediate node based on a key of the object corresponding to the first mapped value and the key range recorded by the first intermediate node, where a key range recorded by the second intermediate node includes a key of an object in the second leaf node, and a key range recorded by the third intermediate node includes a key of an object in the third leaf node.

In an example of this embodiment, the index structure of the second shard includes a pointer pointing from the second leaf node to the third leaf node, and the apparatus 1500 further includes a query module 1540; the obtaining module 1510 is further configured to obtain an access request, where the access request includes a second mapped value, and the second mapped value is a mapped value corresponding to the object in the first leaf node; and the query module 1540 is configured to query, from the second leaf node and the third leaf node based on the pointer, for metadata of an object corresponding to the second mapped value.

In some embodiments, a fourth shard is associated with a fourth mapping range, the fourth shard records metadata of at least one object in the directory, a mapped value of the at least one object belongs to the fourth mapping range, the fourth mapping range is adjacent to the first mapping range, and the apparatus 1500 further includes a combination module 1550; the combination module 1550 is configured to: combine the fourth mapping range and the first mapping range into a fifth mapping range; and combine the first shard and the fourth shard into a fifth shard; and the association module 1530 is further configured to associate the fifth mapping range with the fifth shard.

In an example of this embodiment, a first root node in the index structure of the first shard corresponds to the first mapping range, and a second root node in an index structure of the fourth shard corresponds to the fourth mapping range; and the combination module 1550 is configured to: when a height of the index structure of the first shard is consistent with a height of the index structure of the fourth shard, combine the first root node and the second root node to obtain a root node in an index structure of the fifth shard; and correspond the fifth mapping range to the root node in the index structure of the fifth shard; or when a height of the index structure of the first shard is greater than a height of the index structure of the fourth shard, correspond the fifth mapping range to the first root node to obtain a root node in an index structure of the fifth shard; and create a pointer pointing from the root node in the index structure of the fifth shard to the second root node.

In some embodiments, a size of a key of the object is positively correlated with a size of a mapped value corresponding to the object, and the key of the object is used to query for metadata of the object in the first shard.

The apparatuses provided in embodiments of this application are mainly described above from a perspective of a method procedure. It may be understood that, to implement the foregoing functions, the apparatus includes a corresponding hardware structure and/or software module for performing the functions. A person skilled in the art should easily be aware that, in combination with the examples of modules and algorithm steps described in embodiments disclosed in this specification, this application can be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

An embodiment of this application provides a storage node 1600. The storage node 1600 may include a processor 1610 and a memory 1620. The memory 1620 stores instructions, and the instructions may be executed by the processor 1610. When the instructions are executed by the processor 1610, the storage node 1600 may perform the method shown in FIG. 5 or FIG. 13.

In some embodiments, the storage node 1600 may be implemented as a server or a virtual computing instance (for example, a virtual machine or a container).

As shown in FIG. 16A, the processor 1610 and the memory 1620 may be deployed in a same storage node 1600.

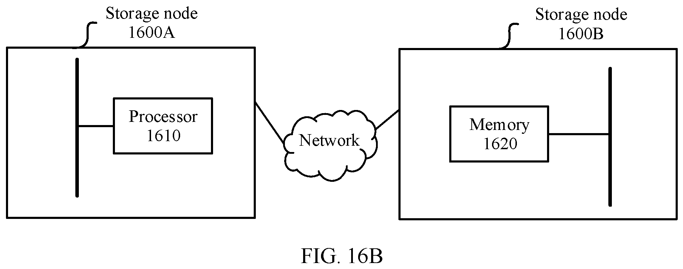

In some embodiments, the storage node 1600 may be implemented as a compute device cluster. For example, as shown in FIG. 16B, the storage node 1600 may include compute devices 1600A and 1600B. The compute devices 1600A and 1600B are connected to each other via a network. The processor 1610 may be deployed in the compute device 1600A, and the memory 1620 may be deployed in the compute device 1600B.

An embodiment of this application further provides a computer program product including instructions. The computer program product may be software or a program product that includes instructions and that can run on a compute device or can be stored in any usable medium. When the computer program product is executed by a processor, the method shown in FIG. 5 or FIG. 13 is implemented.

An embodiment of this application further provides a computer-readable storage medium. The computer-readable storage medium may be any usable medium that can be stored by a processor, or a device like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes a computer program, and the computer program indicates the processor to perform the method shown in FIG. 5 or FIG. 13.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

Finally, it should be noted that the foregoing embodiments are merely intended for describing the technical solutions of this application but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions in embodiments of this application.

## Claims

1. A data processing method, wherein a first shard is associated with a first mapping range, the first shard records metadata of a plurality of objects in a directory, mapped values corresponding to the plurality of objects belong to the first mapping range, an arrangement sequence of the metadata of the plurality of objects in the first shard is consistent with a size sequence of the mapped values corresponding to the plurality of objects, and the method comprises:
obtaining a first mapped value, wherein the first mapped value belongs to the first mapping range;
splitting the first mapping range into a second mapping range and a third mapping range by using the first mapped value as a first split point; and splitting the first shard into a second shard and a third shard by using a location of metadata of an object corresponding to the first mapped value in the first shard as a second split point, wherein a mapped value corresponding to an object in the second shard belongs to the second mapping range, and a mapped value corresponding to an object in the third shard belongs to the third mapping range; and
associating the second mapping range with the second shard, and associating the third mapping range with the third shard.

2. The method according to claim 1, wherein an index structure of the first shard comprises a plurality of leaf nodes, the leaf node records metadata of one or more of the plurality of objects, an arrangement sequence of the plurality of leaf nodes is consistent with a size sequence of mapped values corresponding to objects in the plurality of leaf nodes, and in the leaf node, an arrangement sequence of metadata of objects is consistent with a size sequence of mapped values corresponding to the objects; and
splitting the first shard into the second shard and the third shard by using the location of the metadata of the object corresponding to the first mapped value in the first shard as the second split point comprises:
splitting a first leaf node into a second leaf node and a third leaf node by using a location of the metadata of the object corresponding to the first mapped value in the first leaf node as a third split point, wherein the second leaf node and a fourth leaf node in the plurality of leaf nodes are used as leaf nodes in an index structure of the second shard, and the third leaf node and a fifth leaf node in the plurality of leaf nodes are used as leaf nodes in an index structure of the third shard; and
a mapped value corresponding to an object in the fourth leaf node is less than the first mapped value, and a mapped value corresponding to an object in the fifth leaf node is greater than the first mapped value.

3. The method according to claim 2, wherein the index structure of the first shard comprises a first intermediate node, and a key range recorded by the first intermediate node comprises a key of an object in the first leaf node; and
splitting the first shard into the second shard and the third shard by using the location of the metadata of the object corresponding to the first mapped value in the first shard as the second split point comprises:
splitting the first intermediate node into a second intermediate node and a third intermediate node based on a key of the object corresponding to the first mapped value and the key range recorded by the first intermediate node, wherein a key range recorded by the second intermediate node comprises a key of an object in the second leaf node, and a key range recorded by the third intermediate node comprises a key of an object in the third leaf node.

4. The method according to claim 2 or 3, wherein the index structure of the second shard comprises a pointer pointing from the second leaf node to the third leaf node, and the method further comprises:
obtaining an access request, wherein the access request comprises a second mapped value, and the second mapped value is a mapped value corresponding to the object in the first leaf node; and
querying, from the second leaf node and the third leaf node based on the pointer, for metadata of an object corresponding to the second mapped value.

5. The method according to any one of claims 1 to 4, wherein a fourth shard is associated with a fourth mapping range, the fourth shard records metadata of at least one object in the directory, a mapped value of the at least one object belongs to the fourth mapping range, the fourth mapping range is adjacent to the first mapping range, and the method further comprises:
combining the fourth mapping range and the first mapping range into a fifth mapping range, and combining the first shard and the fourth shard into a fifth shard; and
associating the fifth mapping range with the fifth shard.

6. The method according to claim 5, wherein a first root node in the index structure of the first shard corresponds to the first mapping range, and a second root node in an index structure of the fourth shard corresponds to the fourth mapping range; and
combining the first shard and the fourth shard into the fifth shard comprises:
when a height of the index structure of the first shard is consistent with a height of the index structure of the fourth shard, combining the first root node and the second root node to obtain a root node in an index structure of the fifth shard; and corresponding the fifth mapping range to the root node in the index structure of the fifth shard;
or
when a height of the index structure of the first shard is greater than a height of the index structure of the fourth shard, corresponding the fifth mapping range to the first root node to obtain a root node in an index structure of the fifth shard; and creating a pointer pointing from the root node in the index structure of the fifth shard to the second root node.

7. The method according to any one of claims 1 to 6, wherein a size of a key of the object is positively correlated with a size of a mapped value corresponding to the object, and the key of the object is used to query for metadata of the object in the first shard.

8. A data processing apparatus, wherein a first shard is associated with a first mapping range, the first shard records metadata of a plurality of objects in a directory, mapped values corresponding to the plurality of objects belong to the first mapping range, an arrangement sequence of the metadata of the plurality of objects in the first shard is consistent with a size sequence of the mapped values corresponding to the plurality of objects, and the apparatus comprises:
an obtaining module, configured to obtain a first mapped value, wherein the first mapped value belongs to the first mapping range;
a splitting module, configured to: split the first mapping range into a second mapping range and a third mapping range by using the first mapped value as a first split point; and split the first shard into a second shard and a third shard by using a location of metadata of an object corresponding to the first mapped value in the first shard as a second split point, wherein a mapped value corresponding to an object in the second shard belongs to the second mapping range, and a mapped value corresponding to an object in the third shard belongs to the third mapping range; and
an association module, configured to: associate the second mapping range with the second shard, and associate the third mapping range with the third shard.

9. The apparatus according to claim 8, wherein an index structure of the first shard comprises a plurality of leaf nodes, the leaf node records metadata of one or more of the plurality of objects, an arrangement sequence of the plurality of leaf nodes is consistent with a size sequence of mapped values corresponding to objects in the plurality of leaf nodes, and in the leaf node, an arrangement sequence of metadata of objects is consistent with a size sequence of mapped values corresponding to the objects; and
the splitting module is configured to:
split a first leaf node into a second leaf node and a third leaf node by using a location of the metadata of the object corresponding to the first mapped value in the first leaf node as a third split point, wherein the second leaf node and a fourth leaf node in the plurality of leaf nodes are used as leaf nodes in an index structure of the second shard, and the third leaf node and a fifth leaf node in the plurality of leaf nodes are used as leaf nodes in an index structure of the third shard; and
a mapped value corresponding to an object in the fourth leaf node is less than the first mapped value, and a mapped value corresponding to an object in the fifth leaf node is greater than the first mapped value.

10. The apparatus according to claim 9, wherein the index structure of the first shard comprises a first intermediate node, and a key range recorded by the first intermediate node comprises a key of an object in the first leaf node; and
the splitting module is configured to split the first intermediate node into a second intermediate node and a third intermediate node based on a key of the object corresponding to the first mapped value and the key range recorded by the first intermediate node, wherein a key range recorded by the second intermediate node comprises a key of an object in the second leaf node, and a key range recorded by the third intermediate node comprises a key of an object in the third leaf node.

11. The apparatus according to claim 9 or 10, wherein the index structure of the second shard comprises a pointer pointing from the second leaf node to the third leaf node, and the apparatus further comprises a query module;
the obtaining module is further configured to obtain an access request, wherein the access request comprises a second mapped value, and the second mapped value is a mapped value corresponding to the object in the first leaf node; and
the query module is configured to query, from the second leaf node and the third leaf node based on the pointer, for metadata of an object corresponding to the second mapped value.

12. The apparatus according to any one of claims 8 to 11, wherein a fourth shard is associated with a fourth mapping range, the fourth shard records metadata of at least one object in the directory, a mapped value of the at least one object belongs to the fourth mapping range, the fourth mapping range is adjacent to the first mapping range, and the apparatus further comprises a combination module;
the combination module is configured to: combine the fourth mapping range and the first mapping range into a fifth mapping range; and combine the first shard and the fourth shard into a fifth shard; and
the association module is further configured to associate the fifth mapping range with the fifth shard.

13. The apparatus according to claim 12, wherein a first root node in the index structure of the first shard corresponds to the first mapping range, and a second root node in an index structure of the fourth shard corresponds to the fourth mapping range; and
the combination module is configured to:
when a height of the index structure of the first shard is consistent with a height of the index structure of the fourth shard, combine the first root node and the second root node to obtain a root node in an index structure of the fifth shard; and correspond the fifth mapping range to the root node in the index structure of the fifth shard;
or
when a height of the index structure of the first shard is greater than a height of the index structure of the fourth shard, correspond the fifth mapping range to the first root node to obtain a root node in an index structure of the fifth shard; and create a pointer pointing from the root node in the index structure of the fifth shard to the second root node.

14. The apparatus according to any one of claims 8 to 13, wherein a size of a key of the object is positively correlated with a size of a mapped value corresponding to the object, and the key of the object is used to query for metadata of the object in the first shard.

15. A server, comprising a processor and a memory, wherein the memory is configured to store a computer program; and the processor is configured to execute the computer program, to implement the method according to any one of claims 1 to 8.

16. A computer-readable storage medium, wherein the computer-readable storage medium stores a computer program, and when the computer program is executed by a processor, the method according to any one of claims 1 to 8 is implemented.
